# EUROPEAN PATENT APPLICATION

(11) **EP 4 760 229 A1**
(43) Date of publication of application: **17.06.2026**
(21) Application number: 24851633.8
(22) Date of filing: 26.07.2024
(51) Int. Cl.: G01M 99/00, F16N 29/00, G01N 21/27

(54) **DIAGNOSIS DEVICE, DIAGNOSIS METHOD, AND RECORDING MEDIUM**

(30) Priority: 07.08.2023 JP 2023128863; 07.08.2023 JP 2023128864
(71) Applicant: ENEOS CORPORATION, Chiyoda-ku Tokyo 100-8162 (JP)
(72) Inventor: HIRAOKA Takeshi, Tokyo 100-8162 (JP); HONDA Takashi, Tokyo 100-8162 (JP); OSHIO Tadashi, Tokyo 100-8162 (JP); AYAME Noriko, Tokyo 100-8162 (JP); YAMAGISHI Junya, Tokyo 100-8162 (JP); YAMANAKA Shunsuke, Tokyo 100-8162 (JP); MIYAJIMA Makoto, Tokyo 100-8162 (JP)
(74) Representative: Grünecker Patent- und Rechtsanwälte PartG mbB
(86) International application number: PCT/JP2024/026732
(87) International publication number: WO 2025/033208

(57) **Abstract**

A diagnosis system according to the present disclosure includes: a storage unit configured to store a detection result from a sensor indicating a deterioration state of oil; and a control unit configured to diagnose a replacement period of the oil based on the detection result stored in the storage unit, and notify a notification destination associated with the sensor of replacement information indicating the diagnosed replacement period.

## Description

### [Technical Field]

### (Cross-Reference to Related Applications)

The present application claims the benefit of priority from Japanese Patent Application No. 2023-128863 and Japanese Patent Application No. 2023-128864, each filed on August 7, 2023, the entire contents of which are incorporated herein by reference.

### (Technical Field)

The present disclosure relates to a diagnosis device, a diagnosis method, and a recording medium.

### [Background Art]

Patent Literature 1 describes a method of diagnosing deterioration of lubricating oil by using a sensor.

### [Citation List]

### [Patent Literature]

[Patent Literature 1]
Japanese Patent Laid-Open No. 2019-78718

### [Summary of Invention]

### [Technical Problem]

Oil such as lubricating oil is supplied from a wholesaler to a user via a supplier (a distributor, an authorized dealer, or the like) or directly from the wholesaler to the user. In general, oil deteriorates depending on its usage time and usage environment. Since continued usage of deteriorated oil can lead to machine trouble or the like, the user needs to replace the oil at an appropriate timing. However, the supplier, the user, or the like have not been able to diagnose a replacement period of the oil up to this point by using simple means.

The present disclosure has an object to diagnose a replacement period of oil by using simple means.

### [Solution to Problem]

The disclosure for achieving the above object is a diagnosis device including: a storage unit configured to store a detection result from a sensor indicating a deterioration state of oil; and a control unit configured to diagnose a replacement period of the oil based on the detection result stored in the storage unit, and notify a notification destination associated with the sensor of replacement information indicating the diagnosed replacement period.

Other features of the present disclosure will become apparent from the content of the present description and the accompanying drawings.

### [Advantageous Effect of Invention]

According to the present disclosure, it is possible to diagnose a replacement period of oil by using simple means.

### [Brief Description of Drawings]

[Figure 1] Figure 1 is an explanatory diagram of a diagnosis system.
[Figure 2A] Figure 2A is an explanatory diagram of a sensor unit.
[Figure 2B] Figure 2B is an explanatory diagram of a modified example of the sensor unit.
[Figure 3] Figure 3 is an explanatory diagram of a hardware configuration of a diagnosis device.
[Figure 4] Figure 4 is a flowchart of setting processing.
[Figure 5] Figure 5 is an explanatory diagram of an example of an oil database.
[Figure 6] Figure 6 is an explanatory diagram of an example of a profile database.
[Figure 7A] Figure 7A is a graph showing a relationship between time and intensity values, and a graph showing a change over time in a detection result from a color sensor and a change over time in a remaining content of an antioxidant contained in oil.
[Figure 7B] Figure 7B is a graph showing a relationship between time and intensity values, and a graph showing a change over time in the detection result from the color sensor and a change over time in the remaining content of the antioxidant contained in the oil.
[Figure 7C] Figure 7C is a graph showing a relationship between time and intensity values, and a graph showing a change over time in the detection result from the color sensor and a change over time in the remaining content of the antioxidant contained in the oil.
[Figure 8A] Figure 8A is an explanatory diagram of an example of a supplier database and a user database.
[Figure 8B] Figure 8B is an explanatory diagram of an example of a customer database.
[Figure 9] Figure 9 is an explanatory diagram of an example of a sensor database.
[Figure 10] Figure 10 is an explanatory diagram of an example of a diagnosis settings database.
[Figure 11] Figure 11 is a flowchart of data acquisition processing.
[Figure 12] Figure 12 is an explanatory diagram of an example of a detection result database.
[Figure 13] Figure 13 is a flowchart of notification processing.
[Figure 14] Figure 14 is an explanatory diagram of a replacement period and a remaining period.
[Figure 15A] Figure 15A is an explanatory diagram of an alert screen.
[Figure 15B] Figure 15B is an explanatory diagram of the alert screen.
[Figure 15C] Figure 15C is an explanatory diagram of the alert screen.
[Figure 16] Figure 16 is a flowchart of list notification processing.
[Figure 17A] Figure 17A is an explanatory diagram of an example of a list created in S303.
[Figure 17B] Figure 17B is an explanatory diagram of another example of a list transmitted to a supplier terminal.
[Figure 18] Figure 18 is a flowchart of different list notification processing.
[Figure 19] Figure 19 is an explanatory diagram of a replacement history database.
[Figure 20] Figure 20 is a table showing a correlation between the remaining content of the antioxidant and RGB data.

### [Description of Embodiments]

At least the following aspects will become apparent from the content of the description and the accompanying drawings.

Aspect 1 is a diagnosis device including: a storage unit configured to store detection results from a sensor indicating a deterioration state of oil; and a control unit configured to diagnose a replacement period of the oil based on the detection results stored in the storage unit, and notify a notification destination associated with the sensor of replacement information indicating the diagnosed replacement period. According to such a diagnosis device, it is possible to diagnose the replacement period of the oil by using simple means.

A diagnosis device according to aspect 2 is the diagnosis device according to aspect 1, wherein at least one of a user of the oil and a supplier having supplied the oil to the user can be set as the notification destination. With this, it is possible to set the notification destination in accordance with actual conditions of an oil transaction.

A diagnosis device according to aspect 3 is the diagnosis device according to aspect 1 or 2, wherein the control unit calculates, as the replacement period, a period when the detection result reaches a replacement threshold value. With this, it is possible to diagnose a period when the oil deteriorates to a degree at which to perform oil replacement.

A diagnosis device according to aspect 4 is the diagnosis device according to aspect 3, wherein the replacement threshold value can be set in association with the sensor. With this, it is possible to set a period being a service life of the oil can be set in accordance with each oil.

A diagnosis device according to aspect 5 is the diagnosis device according to any one of aspects 1 to 4, wherein the control unit diagnoses the replacement period using a new detection result among the detection results stored in the storage unit. With this, it is possible to diagnose the replacement period of the oil with high accuracy.

A diagnosis device according to aspect 6 is the diagnosis device according to any one of aspects 1 to 5, wherein the control unit notifies the notification destination of the replacement information when a remaining period reaches a period threshold value. With this, it is possible to notify at a predetermined timing.

A diagnosis device according to aspect 7 is the diagnosis device according to aspect 6, wherein the period threshold value can be set in association with the sensor. With this, it is possible to notify at a timing suited to each requirement.

A diagnosis device according to aspect 8 is the diagnosis device according to aspect 6 or 7, wherein when notifying the notification destination of the replacement information, the control unit notifies the notification destination of a supplier having supplied the oil to a user of the oil of a list including the replacement information of another oil being supplied to the user. With this, the supplier can easily diagnose the replacement period of a plurality of oils used by the user.

A diagnosis device according to aspect 9 is the diagnosis device according to any one of aspect 1 to 8, wherein the control unit notifies the notification destination of a list including the replacement information corresponding to each of a plurality of the sensors. With this, it is possible to diagnose the replacement period of a plurality of oils.

A diagnosis device according to aspect 10 is the diagnosis device according to aspect 9, wherein the control unit notifies the notification destination of the list in which a plurality of pieces of the replacement information are arranged in order of remaining period. With this, it is possible to arrange information of a plurality of oils in the list in descending order of perceived necessity for oil replacement.

A diagnosis device according to aspect 11 is the diagnosis device according to aspect 9 or 10, wherein the control unit identifies the plurality of sensors associated with a user to which a supplier of the oil is supplying the oil, and notifies the supplier of the list including the replacement information corresponding to each of the identified plurality of sensors. With this, the supplier can easily diagnose the replacement period of a plurality of oils used by the user.

A diagnosis device according to aspect 12 is the diagnosis device according to aspect 9, wherein when a user of the oil requests the list, the control unit notifies a supplier having supplied the oil to the user that the user has requested the list. With this, the supplier can know that the user is interested in oil replacement.

A diagnosis device according to aspect 13 is the diagnosis device according to any one of aspects 1 to 11, wherein when a user of the oil requests the replacement information, the control unit notifies a supplier having supplied the oil to the user that the user has requested the replacement information. With this, the supplier can know that the user is interested in oil replacement.

A diagnosis device according to aspect 14 is the diagnosis device according to aspect 12 or 13, wherein the control unit notifies the supplier of information relating to a past oil replacement of the user. With this, the supplier can know a tendency of the user relating to oil replacement.

A diagnosis device according to aspect 15 is the diagnosis device according to any one of aspects 1 to 13, wherein the sensor is a color sensor. It is possible to detect the deterioration state of the oil by using the color sensor, since a color of the oil changes in accordance with deterioration of the oil.

A diagnosis device according to aspect 16 is the diagnosis device according to any one of aspects 1 to 15, wherein the control unit diagnoses deterioration of the oil based on detection results, among the detection results from the sensor, for different wavelengths of light in accordance with a type of the oil.

Aspect 17 is a diagnosis method including: acquiring a detection result from a sensor configured to detect a deterioration state of oil; diagnosing a replacement period of the oil based on the detection result; and notifying a notification destination associated with the sensor of replacement information indicating the diagnosed replacement period. According to such a diagnosis method, it is possible to diagnose the replacement period of the oil by using simple means.

Aspect 18 is a computer-readable recording medium on which a program is recorded for causing a computer to execute: acquiring a detection result from a sensor configured to detect a deterioration state of oil; diagnosing a replacement period of the oil based on the detection result; and notifying a notification destination associated with the sensor of replacement information indicating the diagnosed replacement period.

Aspect 19 is a diagnosis device including: a storage unit configured to store a light reception result obtained when receiving light from oil; and a control unit configured to diagnose deterioration of the oil based on the light reception result, wherein the control unit diagnoses the deterioration of the oil based on a light reception result of light of a wavelength corresponding to a type of the oil. Note that the "control unit" performs predetermined arithmetic processing, but need not perform control processing for predetermined hardware.

Aspect 20 is the diagnosis device according to aspect 19, wherein when diagnosing first oil, the control unit diagnoses deterioration of the first oil based on a light reception result of light of a first wavelength, and when diagnosing second oil different from the first oil, the control unit diagnoses deterioration of the second oil based on a light reception result of light of a second wavelength different from the first wavelength.

Aspect 21 is a computer-readable recording medium on which a program is recorded for causing a computer to execute: acquiring light reception results obtained when receiving light from oil; and diagnosing deterioration of the oil based on a light reception result, among the light reception results, of light of a wavelength corresponding to a type of the oil.

Aspect 22 is a diagnosis method of diagnosing deterioration of oil, the diagnosis method including: when diagnosing first oil, diagnosing deterioration of the first oil based on a light reception result of light of a first wavelength; and when diagnosing second oil different from the first oil, diagnosing deterioration of the second oil based on a light reception result of light of a second wavelength different from the first wavelength. According to such a diagnosis method, it is possible to appropriately diagnose the deterioration of the oil.

Aspect 23 is the diagnosis method according to aspect 22, wherein the light reception result of the light of the first wavelength for the first oil correlates more strongly with a remaining content of an antioxidant contained in the first oil than the light reception result of the light of the second wavelength for the first oil does, and the light reception result of the light of the second wavelength for the second oil correlates more strongly with a remaining content of an antioxidant contained in the second oil than the light reception result of the light of the first wavelength for the second oil does. According to such a diagnosis method, it is possible to appropriately diagnose the deterioration of the oil due to an increase in the remaining content of the antioxidant for both the first oil and the second oil.

### ===First Embodiment===

Hereinafter, a preferred embodiment of the present disclosure will be described with reference to the drawings. The same or equivalent components, members, and the like shown in each drawing are assigned the same reference numeral, and overlapping description thereof is omitted as appropriate.

### <Configuration of Diagnosis System>

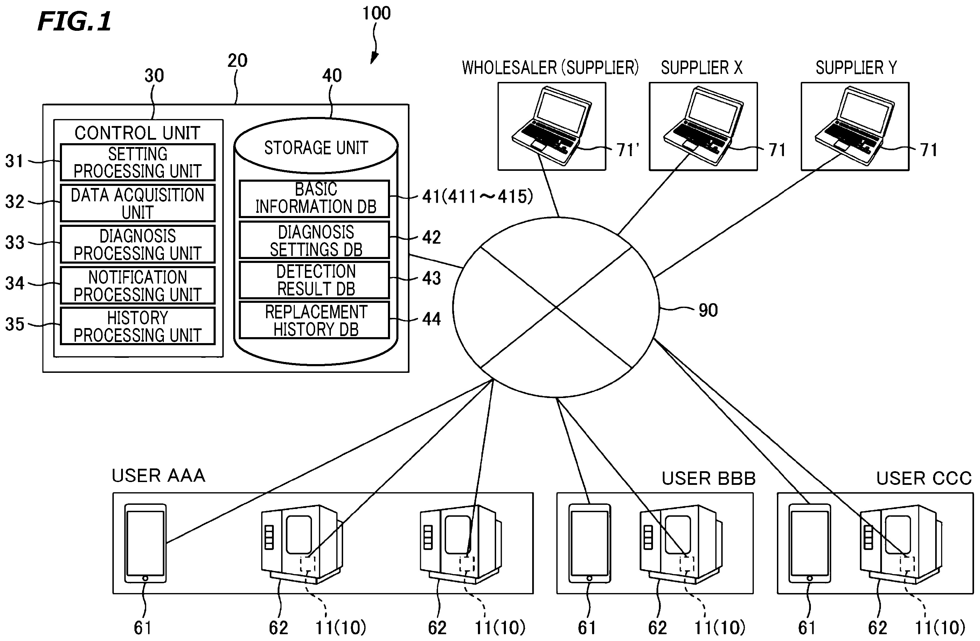

Figure 1 is an explanatory diagram of a diagnosis system 100.

The diagnosis system 100 is a system that diagnoses a replacement period of oil. The diagnosis system 100 includes a sensor unit 10 including a sensor 11, and a diagnosis device 20 including a control unit 30 and a storage unit 40. Communication is possible between the sensor unit 10 and the diagnosis device 20 via a communication network 90. The communication network 90 is a network using, for example, a telephone line (a public telephone line or a mobile phone line), wireless communication, or wired communication. Examples thereof include the Internet, intranet, LAN, and WAN, with the Internet being assumed here. The communication network 90 is also connected to a terminal of a user of the oil (a user terminal 61), a terminal of an authorized dealer, a distributor, or the like that supplies the oil to the user of oil (a supplier terminal 71), and a terminal 71' of a wholesaler of the oil. Communication is also possible between these terminals and the diagnosis device 20 via the communication network 90.

Here, "user" means someone who uses the oil. "Supplier" means someone who supplies the oil to the user of the oil. The supplier does not only include the authorized dealer, the distributor, or the like, but may also include the meaning of wholesaler of the oil (the supplier terminal 71 may also include the meaning of the terminal 71' of the wholesaler). However, "supplier" may also not include the meaning of wholesaler. The supplier and the user, excluding the wholesaler, may be collectively referred to as "customer." Here, "oil" is assumed to be oil that needs to be replaced when deteriorated. For example, the oil includes lubricating oil (processing oil, machine oil, or the like), cooling oil, and rust-preventive oil. The oil is made of a base oil blended with an additive such as an antioxidant. The oil deteriorates due to a decrease in remaining content of the additive such as an antioxidant.

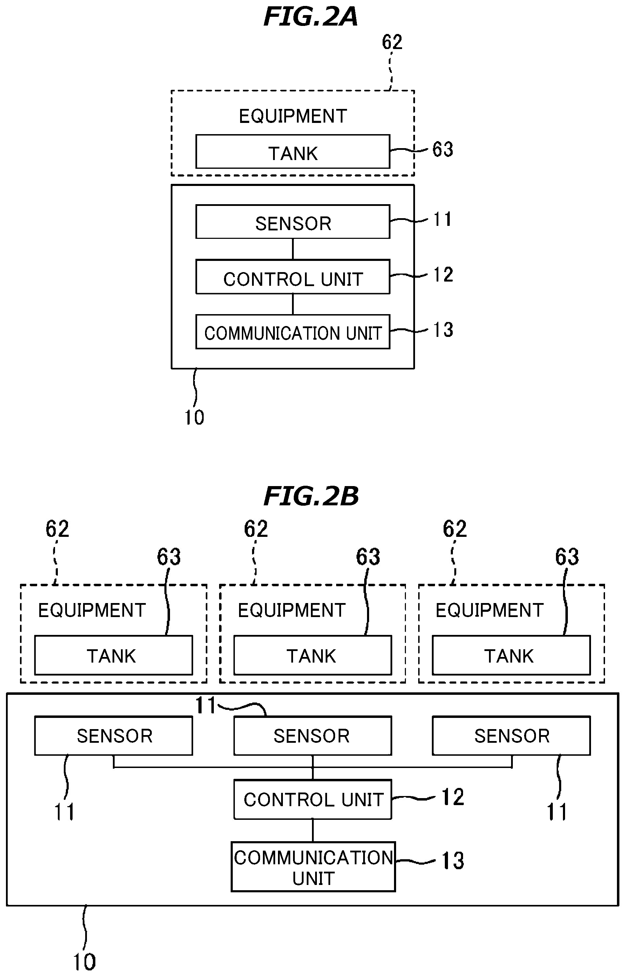

The user terminal 61, equipment 62 that uses the oil, and the like are present at a location of the user of the oil. The user terminal 61 is a terminal used by the user. Here, the user terminal 61 is assumed to be a smartphone, but may be a personal computer, a tablet terminal, or the like. One or more pieces of equipment 62 that use the oil, and the like are present at the location of the user of the oil. The equipment 62 is, for example, a machine tool or a compressor that uses lubricating oil (an example of oil). A tank 63 (see Figures 2A and 2B) for storing the oil is provided in the equipment 62. For example, the oil in each piece of equipment 62 is supplied, replaced, and collected by personnel of the supplier. The sensor unit 10 including the sensor 11 is provided for the equipment 62 that uses the oil (the tank 63 for storing the oil).

The supplier terminal 71 is present at a location of the supplier of the oil. Here, the supplier terminal 71 is assumed to be a personal computer. However, the supplier terminal 71 may be a mobile terminal such as a smartphone or a tablet terminal.

Figure 2A is an explanatory diagram of the sensor unit 10.

The sensor unit 10 is implemented as a measurement device (a detection device) that measures the oil. The sensor unit 10 includes the sensor 11, a control unit 12, and a communication unit 13. The sensor 11 detects a deterioration state of the oil used by the equipment 62 of the user. Here, the sensor 11 is a color sensor. The sensor 11 detects a color of the oil in the tank 63 and outputs RGB data (color data including R data, G data, and B data) indicating respective RGB (red, green, blue) intensity values. The R data is an intensity value indicating a light reception result for light of a red wavelength. The G data is an intensity value indicating a light reception result for light of a green wavelength. The B data is an intensity value indicating a light reception result for light of a blue wavelength. If the sensor 11 can detect the deterioration state of the oil, the sensor 11 need not be a color sensor, and may, for example, analyze components of the oil and output component data as a detection result. The control unit 12 controls the sensor unit 10. The communication unit 13 communicates with the diagnosis device 20 via the communication network 90. For example, the control unit 12 includes an arithmetic processing device such as a CPU or an MPU and a storage device (a main storage device, an auxiliary storage device, or the like) such as RAM or ROM. The control unit 12 receives settings data (described below) from the diagnosis device 20 via the communication unit 13, transmits the detection result (here, the RGB data) from the sensor 11 to the diagnosis device 20, and the like, by the arithmetic processing device executing a program stored in the storage device.

Figure 2B is an explanatory diagram of a modified example of the sensor unit 10. The sensor unit 10 may include a plurality of sensors 11. Each sensor 11 detects the deterioration state of the oil in the tank 63 of each individual piece of equipment 62. According to the sensor unit 10 of the modified example, the deterioration state of the oil in each tank 63 of the plurality of pieces of equipment 62 can be detected by one sensor unit 10 (one control unit 12).

In a first embodiment, the diagnosis system 100 can be constructed by attaching the sensor unit 10 (the sensor 11) to an existing tank 63 of the equipment 62 that uses the oil.

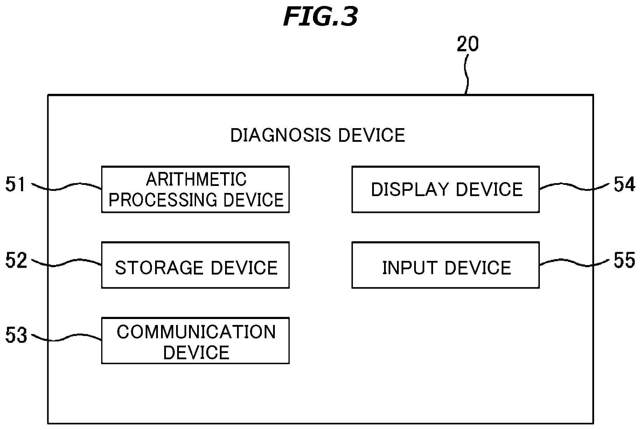

The diagnosis device 20 is a device that diagnoses deterioration of the oil. Figure 3 is an explanatory diagram of a hardware configuration of the diagnosis device 20.

The diagnosis device 20 includes an arithmetic processing device 51, a storage device 52, and a communication device 53. Each element in the drawing is connected via a bus (not shown). The arithmetic processing device 51 includes, for example, a CPU. The storage device 52 includes, for example, a main storage device such as RAM and an auxiliary storage device such as a hard disk drive or SSD. Various functions shown in Figure 1 are realized by the arithmetic processing device 51 executing a program stored in the storage device 52. The communication device 53 is a device for connecting to the communication network 90, and includes a communication module or the like that performs wired or wireless communication. The diagnosis device 20 may also include a display device 54 (for example, a display), an input device 55 (for example, a keyboard or a mouse), and the like. The diagnosis device 20 may be implemented as a single computer or as a plurality of computers. When the diagnosis device 20 is implemented as a plurality of computers, a plurality of functions (the control unit 30, the storage unit 40, and the like shown in Figure 1) may be realized by being designated to separate computers per function, or the same function may be realized through distributed processing by a plurality of computers.

Note that computers such as the user terminal 61 and the supplier terminal 71 described above also include, as hardware, an arithmetic processing device, a storage device, a communication device, an input device, and a display device, similar to the diagnosis device 20 shown in Figure 3.

As shown in Figure 1, the diagnosis device 20 includes the control unit 30 and the storage unit 40.

As described below, the control unit 30 diagnoses the replacement period of the oil, based on the detection result from the sensor 11 (here, RGB data) stored in the storage unit 40. The control unit 30 notifies the user terminal 61, the supplier terminal 71, and the like of replacement information indicating the diagnosed replacement period. The control unit 30 includes a setting processing unit 31, a data acquisition unit 32, a diagnosis processing unit 33, a notification processing unit 34, and a history processing unit 35. Various functions of the control unit 30 will be described below.

The storage unit 40 stores the detection result from the sensor 11. The storage unit 40 stores various types of data to be described below. Here, the storage unit 40 includes a basic information database 41, a diagnosis settings database 42, a detection result database 43, and a replacement history database 44. Various databases of the storage unit 40 will be described below.

### <Concerning Various Processing>

### (Setting Processing)

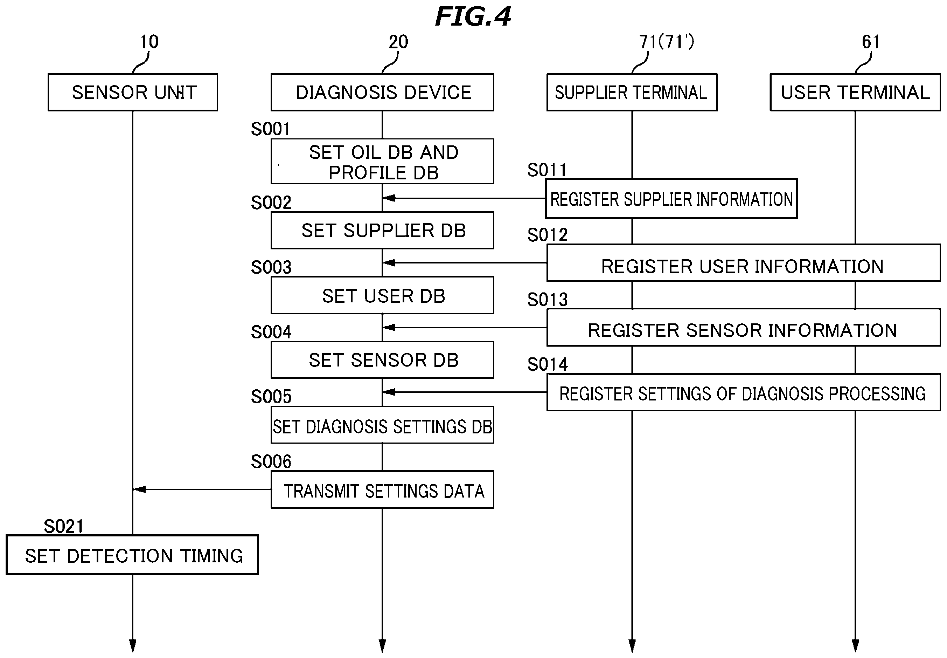

Figure 4 is a flowchart of setting processing.

Among processing shown in the drawing, various processing of the diagnosis device 20 is realized by the arithmetic processing device 51 executing a program stored in the storage device 52. Various processing of the sensor unit 10 is also realized by the arithmetic processing device of the sensor unit 10 executing a program stored in the storage device. The same applies to various processing to be described below.

The setting processing unit 31 of the diagnosis device 20 sets the basic information database 41 in the storage unit 40 (S001 to S004). The basic information database 41 is a database in which basic information is stored. Here, the basic information database 41 includes an oil database 411, a profile database 412, a supplier database 413, a user database 414, and a sensor database 415.

First, the setting processing unit 31 sets the oil database 411 and the profile database 412 in the storage unit 40 (S001). For example, information relating to oil (oil information) is set in the oil database 411, the profile database 412, or the like at a timing when a new oil product is developed, at a timing when a new oil product is released, or the like.

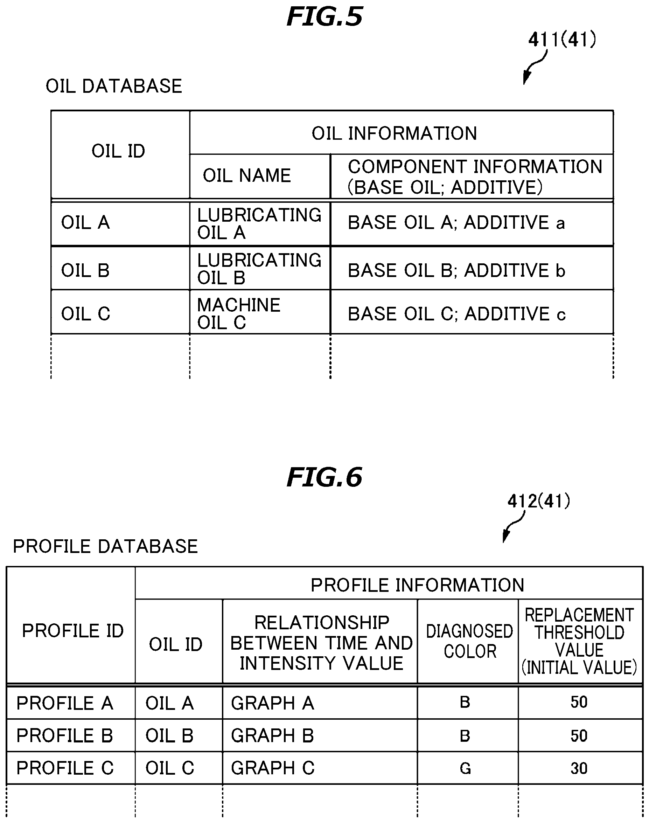

Figure 5 is an explanatory diagram of an example of the oil database 411.

The oil database 411 is a database in which data relating to the oil (oil data) is stored. The oil data is data in which an oil ID and the oil information are associated with each other. The oil ID is information for identifying a type of the oil (identification number). The oil information is information relating to the oil, such as an oil name (product name) and components (base oil, additive, and the like). Note that an antioxidant may be included as additive.

Figure 6 is an explanatory diagram of an example of the profile database 412.

The profile database 412 is a database in which profile data relating characteristics of the oil are stored. Here, the profile data is data in which a profile ID and profile information are associated with each other. The profile ID is information for identifying a profile (identification number). The profile information is information indicating the characteristics of the oil. The oil ID, information indicating a relationship between time and the intensity values (graph information), a diagnosed color, and an initial value of a replacement threshold value are associated with one another as the profile information in the profile data. The oil ID of the profile database 412 is associated with the oil ID of the oil database 411. In other words, the oil ID of the profile database 412 is information for identifying oil corresponding to each piece of profile data.

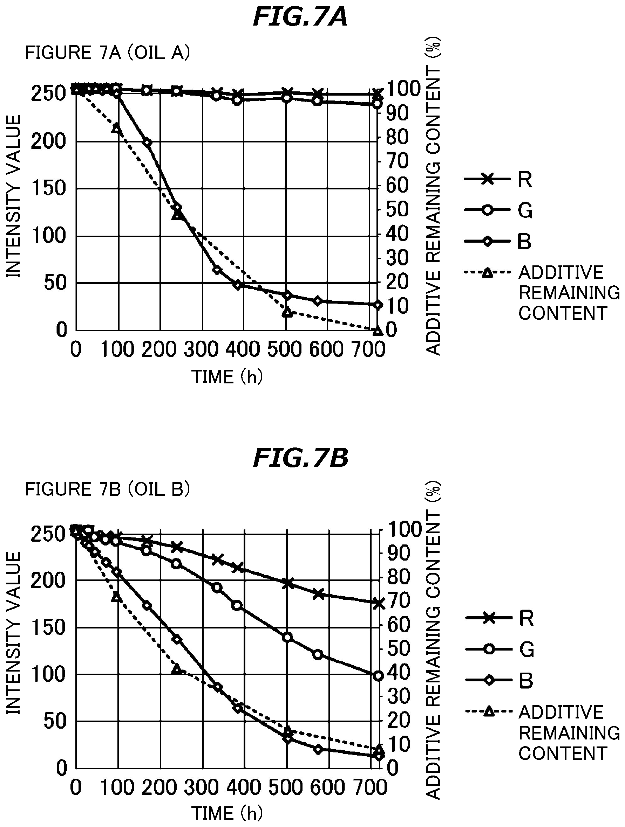

Figures 7A to 7C are examples of graphs showing the relationship between time and the intensity values. Figures 7A to 7C respectively show the profile information of different oils (oil A to oil C). A horizontal axis in each drawing indicates time. A left-side vertical axis indicates the RGB (red, green, and blue) intensity values, and shows the detection result from the sensor 11 when the color of the oil is detected by the sensor 11. In the drawings, a graph of the remaining content of the additive contained in the oil is shown with a dotted line for explanatory purposes. A right-side vertical axis indicates the remaining content (%) of the additive. Note that the graph of the remaining content of the additive (dotted line) is for describing a correlation between the RGB data and the remaining content of the additive, but graph information of the remaining content of the additive need not be included in the profile information.

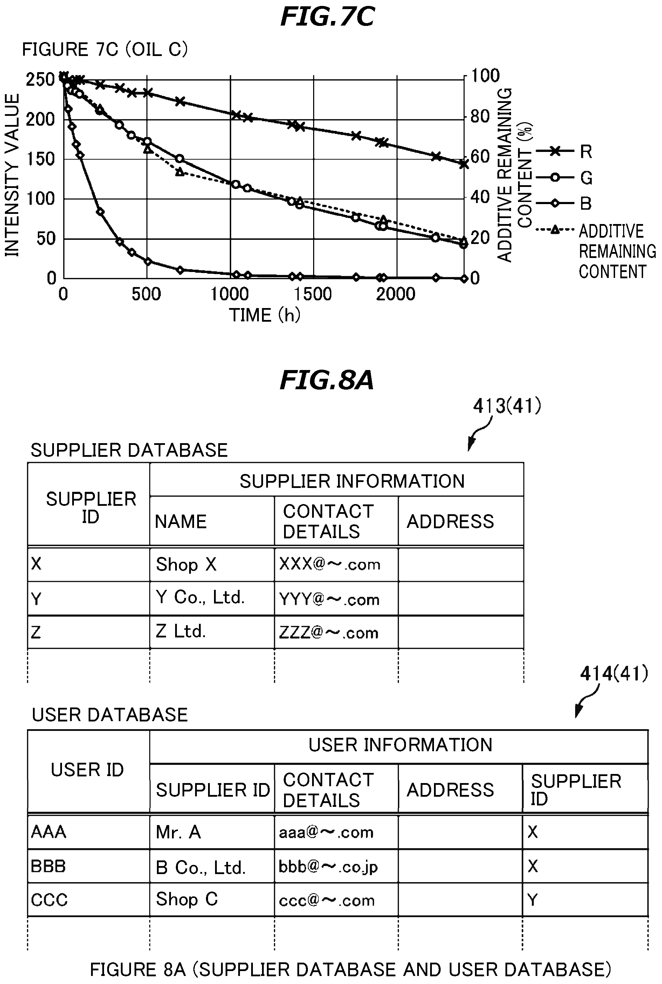

In any of Figures 7A to 7C, the remaining content of the additive contained in the oil decreases over time in oil used under any given conditions, as indicated by the dotted-line graph. In any of Figures 7A to 7C, the detection result from the sensor 11 changes in accordance with a change in the remaining content of the additive, as indicated by the solid-line graph. For example, in the case of oil A, the B data (data indicating the intensity value of blue) output by the sensor 11 decreases in accordance with a decrease in the remaining content of the additive, but the R data and the G data (data indicating the intensity values of red and green) hardly decrease, as shown in Figure 7A. In the case of oil B and oil C, not only the B data but also the R data and the G data decrease in accordance with the decrease in the remaining content of the additive, as shown in Figures 7B and 7C. In the case of oil B, the B data strongly correlates with the remaining content of the additive in comparison to the R data and the G data, as shown in Figure 7B. On the other hand, in the case of oil C, rather than the B data, the G data strongly correlates with the remaining content of the additive in comparison to other colors (the R data and the B data), as shown in Figure 7C.

In this way, the detection result from the sensor 11 differs depending on the type of the oil. Therefore, the profile information relating to the oil is set in the profile database 412 at a timing when a new oil product is developed, at a timing when a new oil product is released, or the like.

The diagnosed color included in the profile information (see Figure 6) is information for identifying data used for diagnosing the oil, among the RGB data being the detection result from the sensor 11. When the diagnosed color is set to "blue (B)", the "B data" among the RGB data is used when diagnosing the oil. When the diagnosed color is set to "green (G)", the "G data" among the RGB data is used when diagnosing the oil. Here, the B data is set so as to be used when diagnosing oil A and oil B, and the G data is set so as to be used when diagnosing oil C.

Note that here, the diagnosed color is a single color, but two or more colors may be set as the diagnosed color. For example, since the data of all colors of the RGB data changes when the oil is contaminated with an impurity, all colors may be set as the diagnosed color when diagnosing the oil for impurity contamination. When two or more colors are set as the diagnosed color, a replacement threshold value may be set per color. In this case, among the data corresponding to two or more colors set as the diagnosed color, the replacement period of the oil may be determined based on the data for all colors having reached the replacement threshold value, or the replacement period of the oil may be determined based on the data of any of the colors having reached the replacement threshold value. For example, when all colors are set as the diagnosed color when diagnosing the oil for impurity contamination, the replacement period of the oil is determined based on the data of all colors in the RGB data having each reached the replacement threshold value.

In the case of oil A and oil B, the B data strongly correlates with the remaining content of the additive in comparison to the R data and the G data (see Figures 7A and 7B). Therefore, the diagnosed color associated with oil A and oil B is set to "blue (B)". On the other hand, in the case of oil C, the G data strongly correlates with the remaining content of the additive in comparison to the R data and the B data, as shown in Figure 7C. Therefore, the diagnosed color associated with oil C is set to "green (G)".

The replacement threshold value included in the profile information (see Figure 6) is a threshold value used to diagnose whether oil replacement is necessary. The "intensity value" is set as the replacement threshold value. For example, in the case of oil A, an intensity value of "50" is set as the replacement threshold value. Therefore, when diagnosing whether oil A needs to be replaced, the intensity value indicated by the "B data" among the RGB data output by the sensor 11 is compared with a threshold value of "50". The initial value of the replacement threshold value is set in the profile database 412. The detection result from the sensor 11 reaching the replacement threshold value indicates that the oil has deteriorated to a degree at which to perform oil replacement. In other words, the replacement threshold value serves as a reference value for determining that the oil has reached the replacement period (in other words, the replacement threshold value serves as a reference value for diagnosing a service life of the oil). Note that it is possible to change settings of the replacement threshold value used to diagnose whether oil replacement is necessary in accordance with a replacement threshold value (an adjustment value) set in the diagnosis settings database 42, as described below.

Note that here, the "intensity value" is set as the replacement threshold value, but the replacement threshold value is not limited to the intensity value, and may be, for example, "a slope (a ratio of a change in the intensity value to time)". In this case, the replacement period of the oil is determined based on the slope of the data corresponding to the diagnosed color (the ratio of the change in the intensity value to time) having reached (or not reaching) the replacement threshold value.

The profile database 412 may be integrated into the oil database 411 by directly incorporating the profile information (the graph information, the diagnosed color, and the replacement threshold value) into the oil database 411 as part of the oil information. In this way, the basic information database 41 need not include part of another type of database. The basic information database 41 may further include a different type of database. The same applies to other types of databases to be described below.

The setting processing unit 31 of the diagnosis device 20 sets the supplier database 413 and the user database 414 in the storage unit 40 (S002 and S003). For example, information relating to the supplier is set in the supplier database 413 (S002) at a timing when a contract is signed between the wholesaler of the oil and the authorized dealer (an example of the supplier), by the supplier registering its own information (supplier information) in the diagnosis device 20 using the supplier terminal 71 (S011) or by a representative of the wholesaler registering the information relating to the supplier in the diagnosis device 20 using the terminal 71' (S011). Information relating to the user (user information) is set in the user database 414 (S003) at a timing when a contract is signed between the supplier and the user, by the user registering its own information (the user information) in the diagnosis device 20 using the user terminal 61 (S012) or by the supplier registering the information relating to the user in the diagnosis device 20 using the supplier terminal 71 (S012).

Figure 8A is an explanatory diagram of an example of the supplier database 413 and the user database 414.

The supplier database 413 is a database in which data relating to the supplier (supplier data) is stored. The supplier data is data in which a supplier ID and the supplier information are associated with each other. The supplier ID is information for identifying the supplier (identification number). The supplier information is information relating to the supplier, such as a name, an address, and contact details (for example, email address) of the supplier.

The user database 414 is a database in which data relating to the user (user data) is stored. The user data is data in which a user ID and the user information are associated with each other. The user ID is information for identifying the user (identification number). The user information is information relating to the user, such as a name, an address, and contact details (for example, email address) of the user. A supplier ID is associated as the user information in the user data. The supplier ID included in the user data indicates the supplier that supplies the oil to the user and is associated with the supplier ID in the supplier database 413.

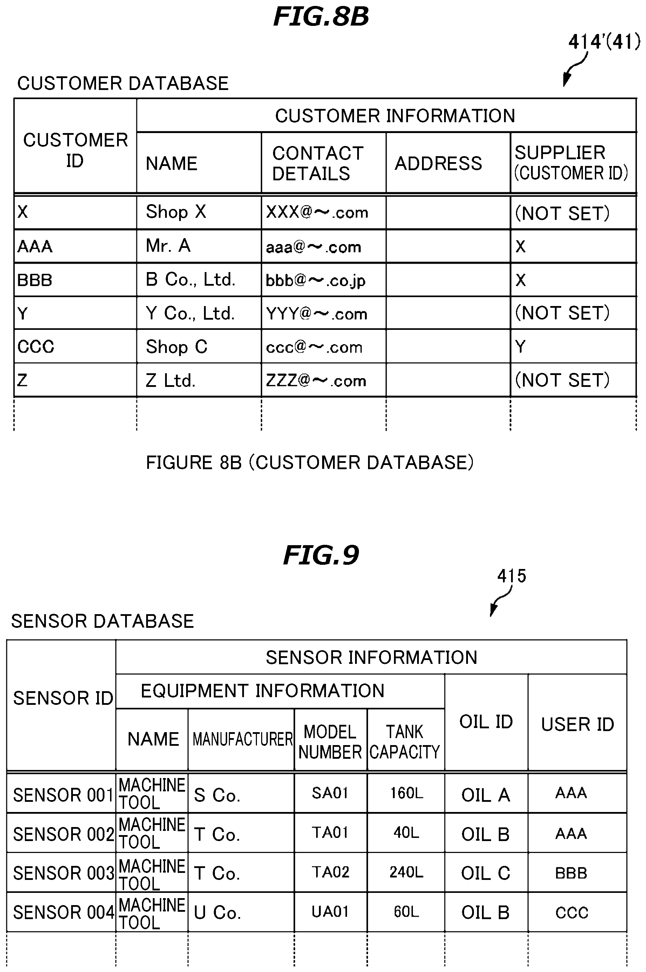

Figure 8B is an explanatory diagram of an example of a customer database 414'. As shown in Figure 8B, the supplier database 413 and the user database 414 shown in Figure 8A may be combined into one database (the customer database 414').

The customer database 414' is a database in which data relating to the customer (customer data) including the supplier and the user is stored, and is a database serving as a substitute for the supplier database 413 and the user database 414 described above. The customer data is data in which a customer ID and customer information are associated with each other. The customer ID is information for identifying the customer (the supplier or the user) (identification number). The customer information is information relating to the customer, such as a name, an address, and contact details (for example, email address) of the customer. The customer information includes information of the supplier that supplies the oil to the customer (here, the customer ID corresponding to the supplier). The drawing shows that "customer ID; X" is a supplier and a customer with "customer ID; AAA" is a user. Here, a customer ID indicating the supplier is not set in information of the supplier with "customer ID; X", but an ID indicating a wholesaler may be set. As described above, the basic information database 41 may include the customer database 414' instead of including the supplier database 413 and the user database 414.

The setting processing unit 31 of the diagnosis device 20 sets the sensor database 415 in the storage unit 40 (S004). For example, information relating to the sensor 11 (sensor information) is set in the sensor database 415 (S004) at a timing when the supplier installs the sensor unit 10 for the equipment 62 being at the location of the user (the equipment 62 that uses the oil), by the user registering the information relating to the sensor 11 in the diagnosis device 20 using the user terminal 61 (S013) or by the supplier registering the information relating to the sensor 11 in the diagnosis device 20 using the supplier terminal 71 (S013).

Figure 9 is an explanatory diagram of an example of the sensor database 415.

The sensor database 415 is a database in which data relating to the sensor 11 (sensor data) is stored. The sensor data is data in which a sensor ID and the sensor information are associated with each other. The sensor ID is information for identifying the sensor 11 (identification number). Here, the sensor ID is a serial number of the sensor 11 preset in the sensor 11. However, the sensor ID may also be a number assigned each time a new sensor 11 is added to the sensor database 415. The sensor information is information relating to the sensor 11. The sensor information includes equipment information, an oil ID, and a user ID. The equipment information is information relating to the equipment 62 to which the sensor 11 is attached. The equipment information includes information such as a name, a manufacturer, a model number, and a tank capacity (or the amount of oil stored in the tank 63) of the equipment 62 to which the sensor 11 is attached. The oil ID of the sensor database 415 is associated with the oil ID of the oil database 411, and is information for identifying the oil to be detected by the sensor 11. The user ID of the sensor database 415 is associated with the user ID of the user database 414, and is information for identifying the user of the equipment 62 to which the sensor 11 is attached. Other information may be associated as the sensor information. For example, when the sensor ID and the serial number of the sensor 11 are different, the serial number of the sensor 11 may be associated with the sensor ID as the sensor information. Note that an equipment database in which the equipment ID and the equipment information are associated may be prepared separately, and the equipment ID may be associated as the equipment information in the sensor data. In this case, the equipment information such as the name, the manufacturer, the model number, and the tank capacity of the equipment is associated with the equipment ID in the equipment database.

Through the above processing (S001 to S004), the basic information database 41 (the oil database 411, the profile database 412, the supplier database 413, the user database 414, and the sensor database 415) is set in the storage unit 40 of the diagnosis device 20. In the above description, the setting processing unit 31 of the diagnosis device 20 registers each database forming the basic information database 41 in the storage unit 40 in an order of the oil database 411, the profile database 412, the supplier database 413, the user database 414, and the sensor database 415, but the order of registering each database is not limited thereto.

Next, the setting processing unit 31 of the diagnosis device 20 sets the diagnosis settings database 42 in the storage unit 40 (S005). For example, settings information of diagnosis processing (diagnosis settings information) using the sensor 11 is set in the diagnosis device 20 at the timing when the supplier installs the sensor unit 10 for the equipment 62 being at the location of the user (the equipment 62 that uses the oil). The diagnosis settings information is set in the diagnosis settings database 42 (S005), by the user registering the information relating to the sensor 11 in the diagnosis device 20 using the user terminal 61 (S014) or by the supplier registering the information relating to the sensor 11 in the diagnosis device 20 using the supplier terminal 71 (S014).

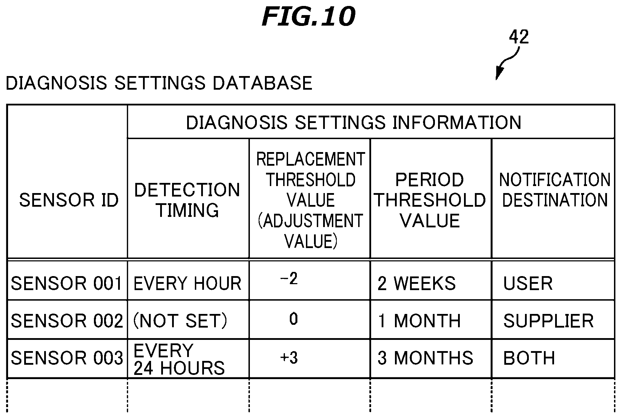

Figure 10 is an explanatory diagram of an example of the diagnosis settings database 42.

The diagnosis settings database 42 is a database in which data relating to settings of the diagnosis processing using the sensor 11 (diagnosis settings data) is stored. The diagnosis settings data is data in which a sensor ID and the diagnosis settings information are associated with each other. The sensor ID is information for identifying the sensor 11 (identification number), and is associated with the sensor ID of the sensor database 415. The diagnosis settings information is information relating to the settings of the diagnosis processing using the sensor 11. Here, the diagnosis settings data includes, as the diagnosis settings information, information relating to a detection timing, threshold values (the replacement threshold value and a period threshold value), and a notification destination.

The detection timing of the diagnosis settings information is information for setting a timing when the sensor 11 detects the oil. Here, a time interval such as "every hour" or "every 24 hours" is set as the detection timing, but a timing such as "8:00 AM" may be set as the detection timing.

The replacement threshold value of the diagnosis settings information is, as already described, information for setting the reference value for determining that the oil has reached the replacement period (the reference value for diagnosing the service life of the oil; a replacement threshold value Tc to be described below). Here, the adjustment value for adjusting the replacement threshold value (the initial value) of the profile database 412 is set in the diagnosis settings database 42 as the replacement threshold value, and the reference value for determining that the oil has reached the replacement period (the replacement threshold value Tc to be described below) is determined by adding the replacement threshold value (the initial value) of the profile database 412 and the replacement threshold value (the adjustment value) of the diagnosis settings database 42. Note that not the adjustment value, an intensity value corresponding to the replacement threshold value Tc to be described below may be directly set in the diagnosis settings database 42.

The period threshold value of the diagnosis settings information is a setting value for setting a timing of providing an alert (described below) through notification. The alert is provided through notification at a timing when a period until the oil reaches the replacement period reaches the period threshold value (described below). Here, the period threshold value is set in association with a sensor (sensor ID), but the period threshold value may be set in association with the profile ID, similar to the replacement threshold value of the profile database 412. In this case, it can be set that an alert is provided through notification also when impurity contamination of the oil is detected by freely setting a period threshold value in association with the profile ID for which all colors are set as the diagnosed color when diagnosing for impurity contamination, for example. Note that the period threshold value can be set to any value, and can be set to a positive value or a negative value. Since the period threshold value can be set to any value, it is possible to set the timing of providing the alert (described below) through notification to suit various requirements.

The notification destination of the diagnosis settings information indicates a recipient to whom the alert (described below) is notified. Here, the "supplier", the "user", or "both (the supplier and the user)" is set as the notification destination in association with the sensor 11. Note that the supplier ID, the user ID (or the customer ID) described above may be associated as the notification destination of the diagnosis settings information.

In the first embodiment, at least one of the user and the supplier can be set as the notification destination in the diagnosis settings database 42. With this, the notification destination of the alert to be described below can be set in accordance with the actual conditions of each oil transaction.

Even when the type of the oil is the same, the service life of the oil may differ per piece of equipment 62 that uses the oil (or per user that uses the equipment 62). For example, it is conceivable that the service life of the oil differs between equipment 62 that requires high accuracy and equipment 62 that can be used even with comparatively deteriorated oil, since it is conceivable that an allowable deterioration degree of the oil differs. Therefore, in the first embodiment, the replacement threshold value can respectively be set in association with the sensor 11 (the sensor ID) in the diagnosis settings database 42. With this, a period being the service life of the oil can be set in accordance with different requirements.

There is a demand to provide the alert through notification at different timings per equipment 62 that uses the oil (or per user that uses the equipment 62, supplier, or the like). For example, in the case of equipment 62 that requires high accuracy and equipment 62 that does not allow using oil having reached the end of its service life, it may be preferable to notify of the oil replacement (alert notification to be described below) at an early timing, taking into consideration a work period of the oil replacement. On the other hand, when using oil that has reached the end of its service life is permissible, it may be preferable to notify of the oil replacement at a timing as close as possible to the end of the service life rather than notifying at an earlier stage. Therefore, in the first embodiment, the period threshold value can be set in association with the sensor 11 (the sensor ID) in the diagnosis settings database 42. With this, the alert (described below) can be provided through notification at a timing suited to each of the different requirements.

When the diagnosis settings information is registered in the diagnosis settings database 42, the setting processing unit 31 of the diagnosis device 20 sets the diagnosis settings information in the diagnosis settings database 42 (S005) and transmits the settings data including information of the detection timing to the sensor unit 10 corresponding to the diagnosis settings information (S006). The sensor unit 10 sets the detection timing based on the settings data received from the diagnosis device 20 (S021). As described below, the sensor unit 10 uses the sensor 11 to detect the oil in accordance with the set detection timing and transmits the detection result to the diagnosis device 20. Note that when the detection timing is preset in the sensor unit 10, the detection timing need not be set in the diagnosis settings database 42 and a setting signal including the information of the detection timing need not be transmitted from the diagnosis device 20 to the sensor unit 10.

### (Data Acquisition Processing)

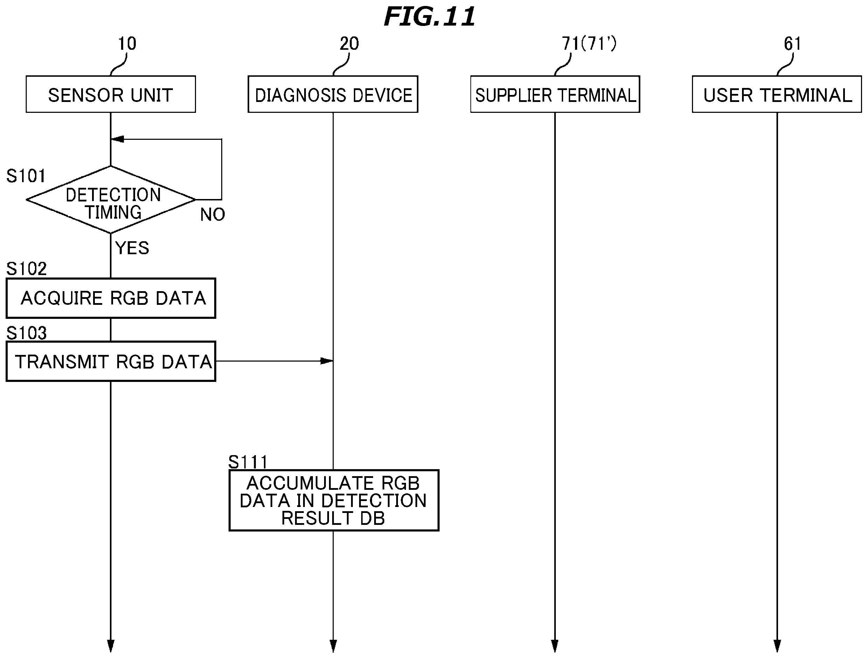

Figure 11 is a flowchart of data acquisition processing.

When the set detection timing is reached (YES in S101), the sensor unit 10 acquires the RGB data from the sensor 11 (S102) and transmits the RGB data to the diagnosis device 20 (S103). The sensor unit 10 preferably adds the sensor ID (here, the serial number of the sensor 11) to the RGB data and transmits the RGB data to the diagnosis device 20. Note that when the sensor ID is different from the serial number and the serial number of the sensor 11 is associated with the sensor ID as the sensor information in the sensor database 415, the sensor unit 10 may add the serial number to the RGB data and transmit the RGB data to the diagnosis device 20, and the diagnosis device 20 may identify the sensor ID based on the serial number. The sensor unit 10 may add information indicating a detection time (detection date and time) to the RGB data and transmit the RGB data to the diagnosis device 20. The data acquisition unit 32 of the diagnosis device 20 receives the RGB data from the sensor unit 10 and accumulates the RGB data in the detection result database 43 (S111).

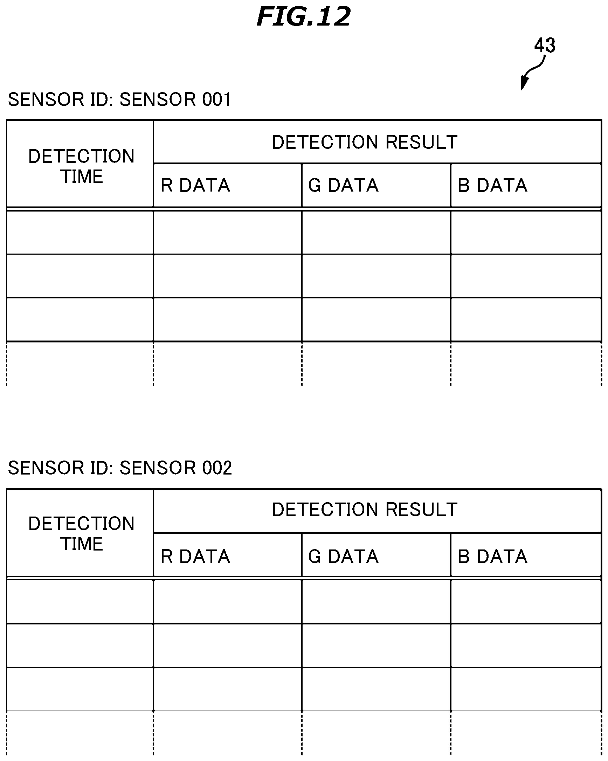

Figure 12 is an explanatory diagram of an example of the detection result database 43.

The detection result database 43 is a database in which the detection result from the sensor 11 is stored. The detection time (the detection date and time) and the detection result (the RGB data) from the sensor 11 at the detection time are associated per sensor ID in the detection result database 43 (each field is blank in the drawing, but information such as time and intensity value is stored). The sensor ID of the detection result database 43 is associated with the sensor ID of the sensor database 415. The diagnosis device 20 registers the received RGB data in the detection result database 43 in association with the sensor ID added to the received RGB data. The diagnosis device 20 registers the RGB data in the detection result database 43 in association with the information indicating the detection time added to the RGB data or in association with the detection time, with a time at which the RGB data is received from the sensor unit 10 as the detection time (S111). The RGB data corresponding to each of a plurality of detection times are accumulated in the detection result database 43. In other words, a history of the detection result (the RGB data) from the sensor 11 is accumulated in the detection result database 43.

### (Notification Processing)

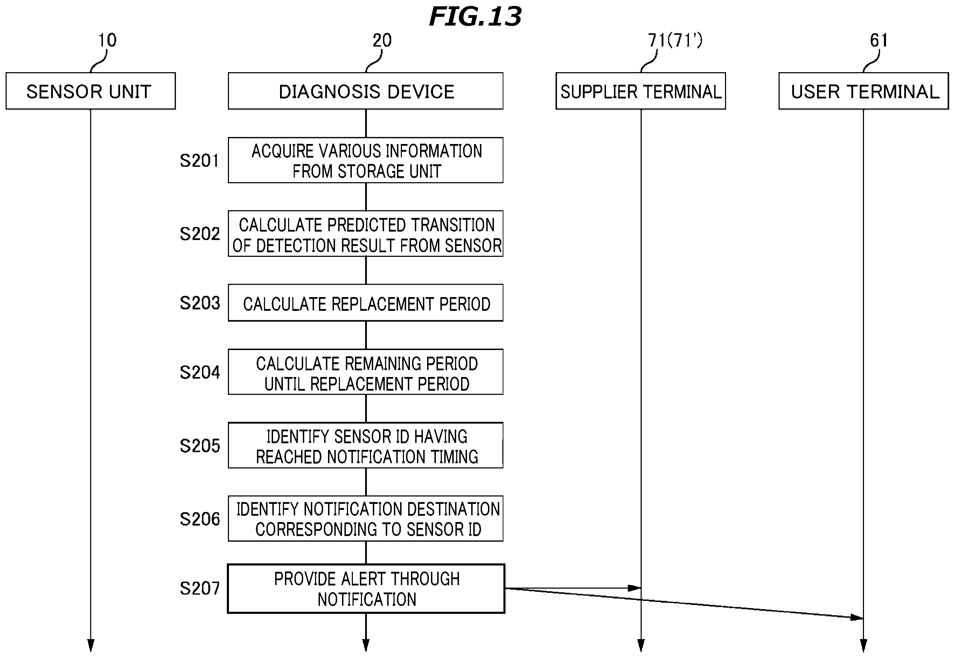

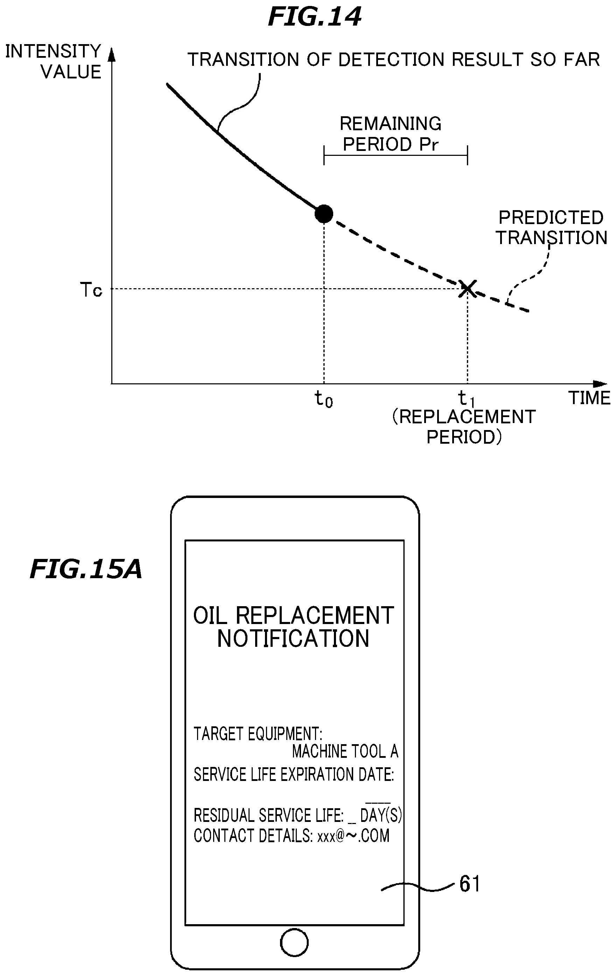

Figure 13 is a flowchart of notification processing. Figure 14 is an explanatory diagram of a replacement period t1 and a remaining period Pr. A horizontal axis of Figure 14 indicates time and a vertical axis indicates the intensity value. A time t0 indicates a current time. A solid line of Figure 14 indicates a transition of the detection result (for example, the B data) from the sensor 11. A dotted line in the drawing indicates a predicted transition of future detection results. Before the time t0 is the solid-line graph indicating past detection results from the sensor 11, and after the time t0 is the dotted-line graph indicating the predicted transition of the detection result from the sensor 11.

First, the diagnosis processing unit 33 of the diagnosis device 20 performs the diagnosis processing for diagnosing the oil replacement period (S201 to S204).

In the diagnosis processing, the diagnosis processing unit 33 acquires information necessary for diagnosing the oil replacement period from the storage unit 40 (S201). Here, the diagnosis processing unit 33 acquires the detection result from the sensor 11, the profile information, and the threshold value.

At this time, the diagnosis processing unit 33 determines the diagnosed color set for the oil associated with the sensor ID. When performing diagnosis for oil detected by "sensor ID; sensor 001", the diagnosis processing unit 33 determines that the diagnosed color is "blue (B)" based on the profile database 412, since the oil ID associated with "sensor ID; sensor 001" of the sensor database 415 is "oil A". When performing diagnosis for oil detected by "sensor ID; sensor 003", the diagnosis processing unit 33 determines that the diagnosed color is "green (G)" based on the profile database 412, since the oil ID associated with "sensor ID; sensor 003" of the sensor database 415 is "oil C".

After determining the diagnosed color, the diagnosis processing unit 33 acquires, from the detection result database 43, the detection result from the sensor 11. At this time, the diagnosis processing unit 33 acquires the data corresponding to the diagnosed color from the RGB data of the detection result database 43. For example, when acquiring a detection result corresponding to "sensor ID; sensor 001", the diagnosis processing unit 33 extracts the B data from the RGB data of "sensor ID; sensor 001" of the detection result database 43, since the diagnosed color corresponding to "sensor ID; sensor 001" is "blue (B)" (see Figures 6 and 9). When acquiring a detection result corresponding to "sensor ID; sensor 003", the diagnosis processing unit 33 extracts the G data from the RGB data of "sensor ID; sensor 003" of the detection result database 43. In this way, the diagnosis processing unit 33 may extract light reception results for different wavelengths of light depending on the type of the oil (as a result, the diagnosis processing unit 33 diagnoses the deterioration of the oil based on the light reception results for different wavelengths of light depending on the type of the oil).

The diagnosis processing unit 33 acquires, from the profile database 412, the profile information (the graph information indicating the relationship between time and the intensity values) corresponding to the sensor 11. At this time, the diagnosis processing unit 33 acquires the graph information corresponding to the diagnosed color from the RGB graph information of the profile database 412 (for example, the graph information of the intensity value of blue (B) from the graph of each RGB intensity value). The diagnosis processing unit 33 may extract graph information for different wavelengths of light depending on the type of the oil (as a result, the diagnosis processing unit 33 diagnoses the deterioration of the oil based on the graph information for different wavelengths of light depending on the type of the oil).

The diagnosis processing unit 33 adds the replacement threshold value (the initial value) of the profile database 412 and the replacement threshold value (the adjustment value) of the diagnosis settings database 42, and acquires the replacement threshold value Tc corresponding to the sensor 11. The diagnosis processing unit 33 acquires, from the diagnosis settings database 42, a period threshold value Tp corresponding to the sensor 11.

Next, the diagnosis processing unit 33 calculates the predicted transition of the detection result from the sensor 11, based on the detection result and the profile information (S202). For example, the diagnosis processing unit 33 adjusts the time axis of the graph of the profile information (see Figures 7A to 7C) to match the transition of the detection result from the sensor 11 so far (see the solid-line graph of Figure 14). The diagnosis processing unit 33 determines the predicted transition of the detection result indicated by the dotted line of Figure 14 (the transition of future detection results), by matching the graph of the profile information with the changed time axis with the transition of the detection result from the sensor 11 so far (see the solid-line graph of Figure 14) (by fitting the graph with the changed time axis to the solid-line graph of Figure 14). Note that a method for determining the predicted transition of the detection result from the sensor 11 is not limited thereto. For example, when the detection result from the sensor 11 changes linearly (when the slope of the graph is constant), it is possible to determine the predicted transition of the detection result from the sensor 11 by determining an extended line of the graph of the detection result from the sensor 11 so far.

It is conceivable that a progression of the deterioration of the oil changes depending on usage conditions of the equipment 62. For example, it is conceivable that the change in the detection result from the sensor 11 accelerates, since the deterioration of the oil accelerates when a usage frequency of the equipment 62 increases. Conversely, it is conceivable that the change in the detection result from the sensor 11 decelerates, since the deterioration of the oil decelerates when the usage frequency of the equipment 62 decreases. Since the progression of the deterioration of the oil changes in this way, it is conceivable that predicting the transition of future detection results based on the most recent progression of the deterioration of the oil results in higher prediction accuracy. Therefore, in the first embodiment, the predicted transition of the detection result indicated by the dotted line of Figure 14 is determined, by using a new detection result among the detection results stored in the detection result database 43 (in other words, without using old detection results). With this, it is possible to predict the transition of future detection results with high accuracy, and to diagnose the replacement period of the oil with high accuracy. However, the predicted transition of the detection result indicated by the dotted line of Figure 14 may be determined by using the detection result from the sensor 11 from initial use of the oil.

Next, the diagnosis processing unit 33 calculates the replacement period t1 when the detection result from the sensor 11 reaches the replacement threshold value Tc (S203). For example, the diagnosis processing unit 33 calculates an intersection of the dotted-line graph of Figure 14 and the replacement threshold value Tc, and sets a time coordinate of the intersection as the replacement period t1. The replacement period t1 when the detection result of the sensor 11 reaches the replacement threshold value Tc corresponds to a period when the oil has deteriorated to the degree at which to perform oil replacement and corresponds to a period when the oil reaches the end of its service life. Therefore, in the following description, the period when the detection result from the sensor 11 reaches the replacement threshold value Tc may be referred to as "service life expiration date" of the oil.

The diagnosis processing unit 33 calculates the remaining period Pr until the replacement period t1 (S204). For example, the diagnosis processing unit 33 calculates the remaining period Pr by calculating a difference between the replacement period t1 and the current time t0, as shown in Figure 14. The remaining period Pr corresponds to a "residual service life (remaining service life)" of the oil, since the remaining period Pr is a period (days) until the service life expiration date of the oil. When the detection result from the sensor 11 has already fallen below the replacement threshold value Tc, the remaining period Pr is expressed as a negative value.

Note that the diagnosis processing unit 33 performs the diagnosis processing shown in S201 to S204 per sensor 11, and calculates the replacement period t1 and the remaining period Pr of the oil per sensor 11 (in other words, per oil to be detected by each sensor 11).

After the diagnosis processing is performed by the diagnosis processing unit 33 (S201 to S204), the notification processing unit 34 of the diagnosis device 20 performs the notification processing (S205 to S207).

First, the notification processing unit 34 identifies a sensor ID having reached a notification timing (S205). At this time, the notification processing unit 34 compares the remaining period Pr (see Figure 14) calculated in S204 with the period threshold value Tp (see Figure 10). When the remaining period Pr is less than the period threshold value Tp, the notification processing unit 34 determines that the notification timing has been reached. That is, the notification processing unit 34 identifies the sensor ID that satisfies a condition of the remaining period Pr being less than the period threshold value Tp, based on the remaining period Pr calculated per sensor 11 (per sensor ID) and the period threshold value Tp set per sensor 11 in the diagnosis settings database 42.

Next, the notification processing unit 34 identifies the notification destination corresponding to the sensor ID identified in S205 (S206).

For example, when the sensor ID identified in S205 is "sensor 001", the notification processing unit 34 identifies that the notification destination associated with "sensor 001" of the diagnosis settings database 42 is the "user" (see Figure 10), identifies that the user ID associated with "sensor 001" of the sensor database 415 is "AAA" (see Figure 9), and identifies the contact details (for example, email address) associated with "AAA" of the user database 414 as the notification destination of the "user" corresponding to the sensor ID (see Figure 8A). When the supplier ID and the user ID (or the customer ID) are associated as the notification destination of the diagnosis settings information in the diagnosis settings database 42, the notification processing unit 34 identifies the contact details of the supplier ID or the like associated with "sensor 001" of the diagnosis settings database 42.

For example, when the sensor ID identified in S206 is "sensor 002", the notification processing unit 34 identifies that the notification destination associated with "sensor 002" of the diagnosis settings database 42 is the "supplier", identifies that the user ID associated with "sensor 002" of the sensor database 415 is "AAA" (see Figure 9), identifies that the supplier ID associated with "AAA" of the user database 414 is "X" (see Figure 8A), and identifies the contact details (for example, email address) associated with "X" of the supplier database 413 as the notification destination of the "supplier" corresponding to the sensor ID (see Figure 8A).

Next, the notification processing unit 34 notifies the notification destination identified in S206 of the alert (S207). The alert provided from the notification processing unit 34 through notification includes information indicating the replacement period (the replacement information) diagnosed by the diagnosis processing unit 33. Note that the replacement information provided by the notification processing unit 34 through notification may be the information indicating the replacement period diagnosed by the diagnosis processing unit 33, and is not limited to date information indicating the replacement period t1. For example, the replacement information includes "information relating to the remaining period indicating the number of days until the replacement period", as well as "information indicating that the replacement period is approaching".

In the first embodiment, the notification processing unit 34 can notify the notification destination of the alert at a timing at which the remaining period Pr reaches the period threshold value Tp, by performing the notification processing from S205 to S207. With this, the alert can be provided through notification at a predetermined timing. If the period threshold value Tp is set to a positive value, the alert can be provided through notification before the oil reaches the end of its service life (before the service life expiration date of the oil). On the other hand, it is also possible to provide the alert through notification after the oil has reached the end of its service life, by setting the period threshold value Tp to a negative value.

In the first embodiment, the period threshold values can each be set in association with the sensor 11 (the sensor ID) in the diagnosis settings database 42 described above. With this, the alert can be provided through notification at a timing suited to each of the different requirements.

Figures 15A to 15C are explanatory diagrams of an alert screen. The alert screen showing the replacement information is displayed on the user terminal 61, the supplier terminal 71, or the like notified of the alert, by the notification processing unit 34 providing the alert through notification (S207). Figures 15A to 15C show the alert screen displayed on the user terminal 61.

The alert screen is a screen displayed on the user terminal 61, the supplier terminal 71, or the like having received the alert. The information indicating the oil replacement period diagnosed by the diagnosis processing unit 33 is displayed on the alert screen.

Target equipment, the service life expiration date, the residual service life, and the contact details are displayed on the alert screen shown in Figure 15A. Information relating to the equipment 62 in which the oil to be replaced is used (the equipment information) is shown in a "target equipment" field of the alert screen. Information corresponding to the replacement period t1 (see Figure 14), the remaining period Pr, and the like are shown in "service life expiration date" and "residual service life" fields of the alert screen. The contact details of the supplier that supplies the oil are shown in a "contact details" field of the alert screen. Note that the contact details of the user of the oil may be displayed on a screen displayed on the supplier terminal 71. A numerical value such as a date or the number of days corresponding to the replacement period t1 (see Figure 14), the remaining period Pr, or the like is directly displayed on the alert screen shown in Figure 15A as the replacement information (the information indicating the replacement period diagnosed by the diagnosis processing unit 33).

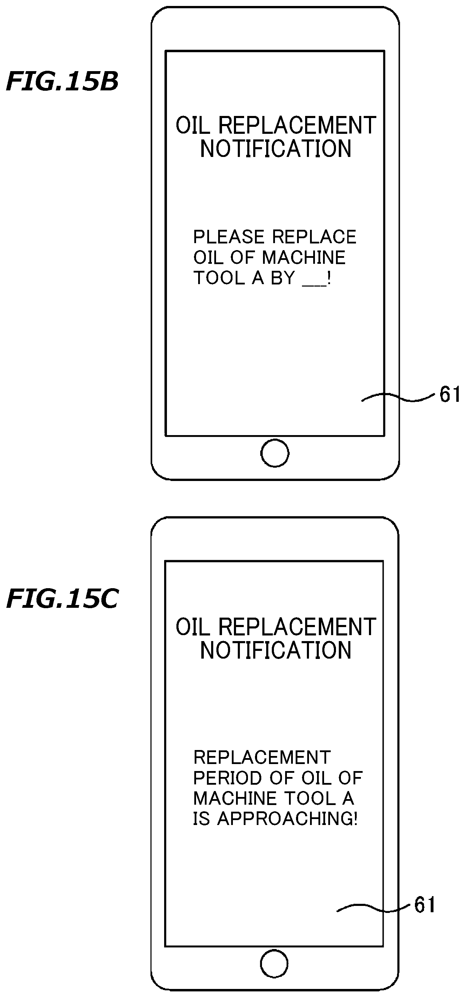

The information relating to the equipment 62 in which the oil to be replaced is used and the information corresponding to the replacement period t1 (see Figure 14; the service life expiration date) are displayed on the alert screen shown in Figure 15B. In this way, only one piece of the information corresponding to the replacement period t1 and the remaining period Pr may be displayed on the alert screen as the replacement information.

The information relating to the equipment 62 in which the oil to be replaced is used and information indicating that the replacement period of the oil is approaching are displayed on the alert screen shown in Figure 15C. In this way, the replacement information displayed on the alert screen need to be a specific date, number of days, or the like, and may be information indicating that the replacement period diagnosed by the diagnosis processing unit 33 is approaching.

By displaying the alert screen on the user terminal 61, the user can know the replacement period of the oil used in the target equipment and replace the oil as necessary. By displaying the alert screen on the supplier terminal 71, the supplier can know the replacement period of the oil used in the equipment 62 at the location of the user, and encourage the user to replace the oil as necessary. In this way, it is possible to encourage the user, the supplier, or the like to replace the oil, by the notification processing unit 34 providing the alert through notification in S207.

### (List Notification Processing)

In the above-described notification processing of Figure 13, the alert is provided through notification regarding the oil of a certain piece of equipment 62 (S207). However, in a situation in which the user is using a plurality of pieces of equipment 62, it is convenient to be able to also know information of another oil supplied to the user when providing information of the oil of a certain piece of equipment 62 through notification. Therefore, processing will be described of providing a list including information of oil of a plurality of pieces of equipment 62 used by the user through notification.

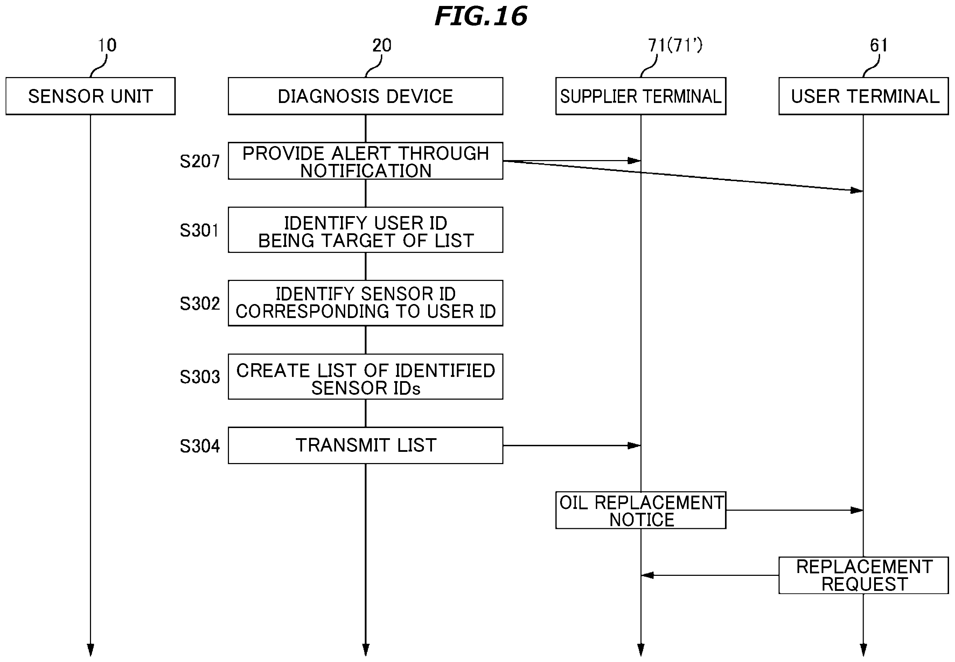

Figure 16 is a flowchart of list notification processing. Since S207 in the drawing (and the processing performed before S207) is the same as in Figure 13, description thereof is omitted here.

The notification processing unit 34 identifies the user ID being a target of a list (S301). Here, the notification processing unit 34 identifies the user ID corresponding to the sensor ID having reached the notification timing. For example, when the sensor ID identified in S205 described above is "sensor 001", the notification processing unit 34 identifies that the user ID being the target of the list is "AAA" based on the sensor database 415 (see Figure 9).

Next, the notification processing unit 34 identifies the sensor ID corresponding to the user ID identified in S301 (S302). For example, when the user ID identified in S301 is "AAA", the notification processing unit 34 identifies "sensor 001" and "sensor 002" as the sensor ID being the target of the list based on the sensor database 415 (see Figure 9). The notification processing unit 34 extracts information of the oil corresponding to the sensor ID identified in S302, and creates the list (S303).

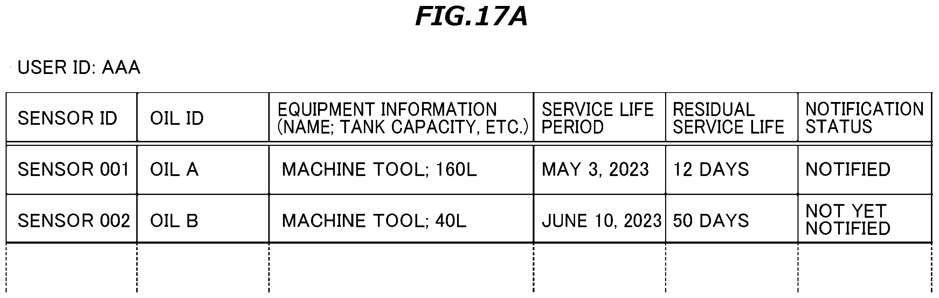

Figure 17A is an explanatory diagram of an example of the list created in S303. Note that Figure 17A is also an explanatory diagram of an example of the list transmitted to the supplier terminal 71 in S304.

The list shows the information of the oil used in the equipment 62 corresponding to the user ID. In a situation in which the user is using a plurality of pieces of equipment 62, the list includes information of the oil of each of the plurality of pieces of equipment 62 used by the user. The list shown in Figure 17A includes not only the information of the oil corresponding to "sensor 001" for which the user has been notified of the alert, but also information of another oil (the oil corresponding to "sensor 002").

The list in the drawing includes information of the sensor ID, the oil ID, the equipment information, the service life expiration date, the residual service life, and a notification status. The sensor ID is information (identification number) relating to the sensor 11 attached to the equipment 62 used by the user. The oil ID is information for identifying the oil to be detected by the sensor 11. The equipment information is information relating to the equipment 62 in which the oil is used. The service life expiration date is information corresponding to the replacement period t1 (see Figure 14). The residual service life is information corresponding to the remaining period Pr (see Figure 14). The notification status indicates whether the above-described alert has been provided through notification. The list in the drawing includes information such as the service life expiration date (the replacement period t1 calculated by the diagnosis processing unit 33) and the residual service life (the remaining period Pr calculated by the diagnosis processing unit 33) as the replacement information (the information indicating the replacement period diagnosed by the diagnosis processing unit 33). However, the replacement information included in the list may be one of the service life expiration date and the residual service life, or may be other information. The list may include information of the user ID in association with the sensor ID.

After creating the list, the notification processing unit 34 notifies the supplier terminal 71 of the list (S304). The notification processing unit 34 can display the replacement information of each oil of the plurality of pieces of equipment 62 used by the user on the supplier terminal 71 by providing the list through notification. The supplier can know the replacement information of each oil of the plurality of pieces of equipment 62 used by the user based on the list. With this, for example, the supplier can not only replace oil for which the user has been notified of the alert, but also provide comprehensive suggestion including replacement of another oil. In other words, with this, the supplier can easily diagnose the replacement period of a plurality of oils used by the user. In this way, when providing the alert regarding the oil of a certain piece of equipment 62 through notification, it is effective to notify the supplier terminal 71 of the list including the information of another oil supplied to the user.

### (List Notification Processing in Response to Request)

In the above-described list notification processing, the supplier terminal 71 is notified of the list when providing the alert regarding the oil of a certain piece of equipment 62 through notification. However, the list may be provided through notification in response to a request from the user (or the supplier), as described next.

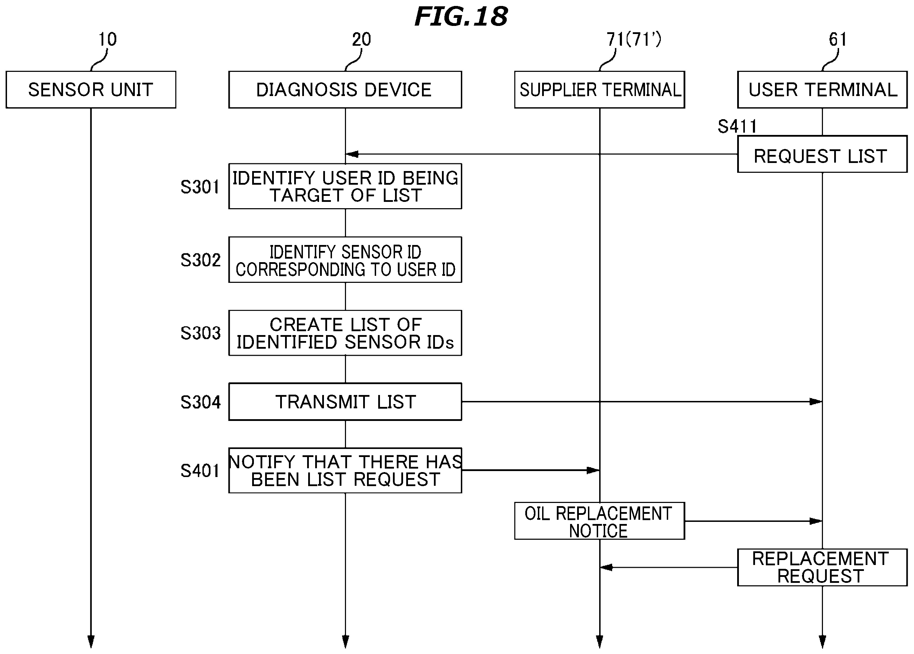

Figure 18 is a flowchart of different list notification processing. In the drawing, a flowchart is shown of a case in which the list is provided through notification in response to a request from the user terminal 61.

Upon accepting the request for the list from the user terminal 61, the notification processing unit 34 identifies the user ID being the target of the list (S301). As indicated by the flow in the drawing, when a terminal requesting the list is the user terminal 61, the notification processing unit 34 identifies the user ID corresponding to the user terminal 61 in S301. When the terminal requesting the list is the supplier terminal 71, the supplier ID corresponding to the supplier terminal 71 is identified and the user ID associated with the identified supplier ID is identified in S301 (when the supplier is supplying the oil to a plurality of users, a plurality of user IDs are identified in S301).

Next, the notification processing unit 34 identifies the sensor ID corresponding to the user ID identified in S301 (S302), extracts the information of the oil corresponding to the sensor ID identified in S302, and creates the list (S303), similar to the notification processing of Figure 16. When creating the list in S303, the diagnosis processing unit 33 obtains the replacement information necessary for the list (for example, calculates the replacement period t1 corresponding to the service life expiration date and the remaining period Pr corresponding to the residual service life).

After creating the list, the notification processing unit 34 notifies the terminal requesting the list (here, the user terminal 61) of the list (S304). In S304 in the drawing, the user terminal 61 is notified of the list, but the notification processing unit 34 notifies the supplier terminal 71 of the list when receiving the request for the list from the supplier terminal 71. That is, when receiving the request for the list from the supplier terminal 71, the notification processing unit 34 identifies the supplier ID (S301), identifies a plurality of sensor IDs associated with the identified supplier ID (S302), creates the list including the replacement information corresponding to each of the identified plurality of sensor IDs (S303), and notifies the supplier terminal 71 of the list (S304). With this, the supplier can diagnose the replacement period of the oil by using simple means. When the supplier is supplying oil to a plurality of users, the notification processing unit 34 notifies the supplier terminal 71 of a list of the plurality of users (S304).

The list provided by the notification processing unit 34 through notification includes the replacement information corresponding to each of the plurality of sensors 11. With this, it is possible to diagnose the replacement period of a plurality of oils by using simple means. Note that the notification processing unit 34 preferably provides the list of the plurality of pieces of replacement information arranged in order of the remaining period through notification. With this, confirmation work of the supplier is facilitated, since the information of the plurality of oils is arranged in the list in descending order of perceived necessity for oil replacement.

When there has been a request for the list or the replacement information from the user terminal 61, the user can be assumed to be interested in oil replacement. Therefore, when there has been a request for the list or the replacement information from the user terminal 61, the notification processing unit 34 notifies the supplier terminal 71 of a notification indicating that there has been a request for the list or the replacement information from the user terminal 61 (S401). With this, the supplier can know that the user is interested in oil replacement. When there has been a request for the list from the user terminal 61, the notification processing unit 34 may transmit, to the supplier terminal 71 as this notification, the list having been transmitted to the user terminal 61. With this, the supplier can more easily provide comprehensive suggestion including replacement of the oil in the list to the user.

### (List Notification Processing Using Replacement History)

The history processing unit 35 of the control unit 30 sets information relating to oil replacement performed in the past (actual replacement information) in the replacement history database 44. For example, after performing oil replacement, the information relating to oil replacement actually performed (the actual replacement information) is set in the replacement history database 44, by the user registering the information relating to oil replacement (the actual replacement information) in the diagnosis device 20 using the user terminal 61 or by the supplier registering the information relating to oil replacement actually performed (the actual replacement information) in the diagnosis device 20 using the supplier terminal 71.

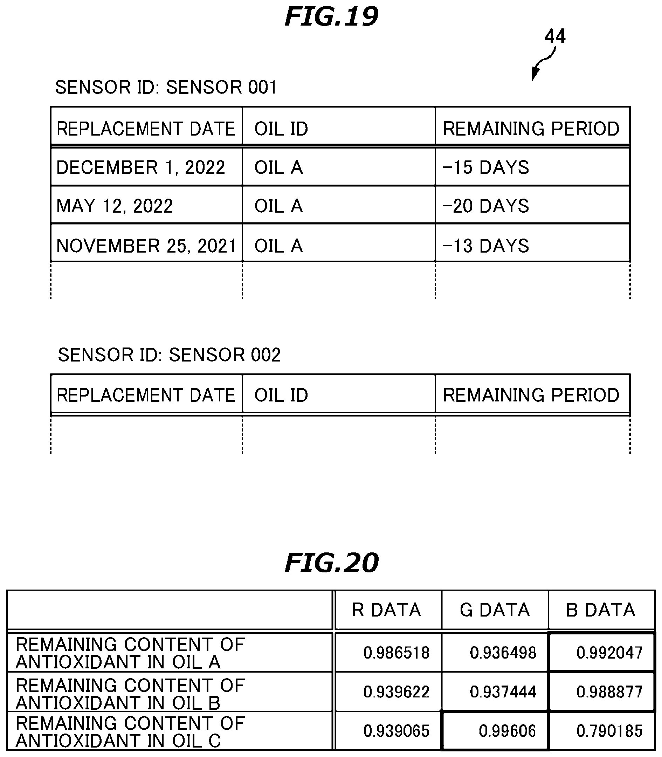

Figure 19 is an explanatory diagram of the replacement history database 44.

The replacement history database 44 is a database in which the information relating to oil replacement performed in the past (the actual replacement information) is stored. The actual replacement information is accumulated per sensor ID in the replacement history database 44. Here, information such as the date when oil replacement was performed, the oil ID, and the remaining period are included as the actual replacement information. The remaining period of the actual replacement information indicates the residual service life of the oil at the time of the actual oil replacement. Specifically, the remaining period of the actual replacement information indicates a difference between the replacement period t1 (the period when it is diagnosed that the detection result from the sensor 11 has reached the replacement threshold value Tc or the period when the detection result from the sensor 11 reaches the replacement threshold value Tc) and the period when the oil replacement was actually performed. When the oil replacement was performed at a timing earlier than the diagnosed replacement period t1, the remaining period is a positive value. On the other hand, when the oil replacement was performed at a timing later than the replacement period t1, the remaining period is a negative value. The remaining period of the replacement history database 44 is information indicating a tendency of an oil replacement timing of the user.

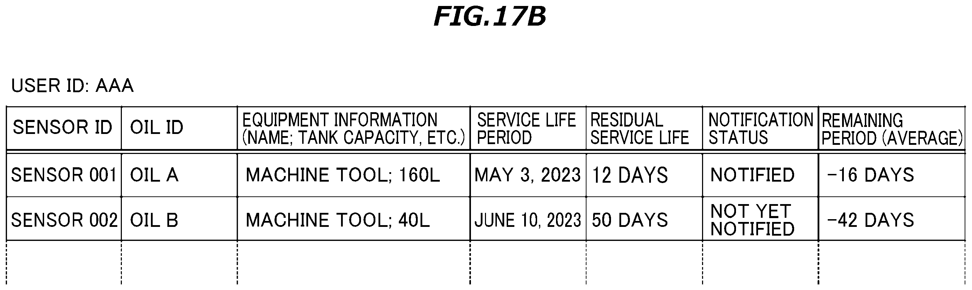

Figure 17B is an explanatory diagram of another example of a list transmitted to the supplier terminal 71. Note that the list shown in Figure 17B may include information of the user ID in association with the sensor ID.

As already described, the notification processing unit 34 may transmit the list to the supplier terminal 71 in S401 of Figure 18. In this case, the list transmitted to the supplier terminal 71 may include information relating to past oil replacement of the user. As shown in Figure 17B, the information relating to past oil replacement preferably includes information relating to the residual service life of the oil at the time of the past oil replacement (the remaining period of the actual replacement information in the replacement history database 44). With this, the supplier can know the tendency of the oil replacement timing of the user, and suggest the user to replace the oil based on the tendency of the user. For example, the supplier having received the list of Figure 17B can suggest the user to replace the oil knowing that the oil replacement timing of this user is comparatively late. Here, the notification processing unit 34 notifies the supplier terminal 71 of information relating to the residual service life of the oil at the time of past oil replacement, but the actual replacement information of which the supplier terminal 71 is notified is not limited to the residual service life of the oil and may include other actual replacement information.

### <Summary>

As described above, the diagnosis system 100 of the first embodiment includes the sensor 11, the storage unit 40 that stores the detection result from the sensor 11, and the control unit 30. The control unit 30 of the first embodiment diagnoses the replacement period of the oil (see S203 of Figure 13) based on the detection result stored in the storage unit 40 (see the detection result database 43 of Figure 12), and notifies the notification destination associated with the sensor 11 of the replacement information indicated the diagnosed replacement period (see S207 of Figure 13). According to the diagnosis system 100 of the first embodiment configured in this way, it is possible to easily know the replacement period of the oil detected by the sensor 11 and diagnose the replacement period of the oil by simple means, since the notification destination associated with the sensor 11 is notified of the replacement information.

In a diagnosis method of the first embodiment, the detection result is acquired from the sensor 11 (see Figure 11), the replacement period of oil is diagnosed based on the detection result from the sensor 11 (see S203 of Figure 13), and the notification destination associated with the sensor is notified of the replacement information indicating the diagnosed replacement period (see S207 of Figure 13). According to such a diagnosis method, it is possible to easily know the replacement period of the oil detected by the sensor 11 and diagnose the replacement period of the oil by simple means, since the notification destination associated with the sensor 11 is notified of the replacement information.

Note that in the above description, the sensor 11 that detects the deterioration state of the oil is a color sensor. It is possible to detect the deterioration state of the oil by using the color sensor, since the color of the oil changes in accordance with the remaining content of the additive (see Figures 7A to 7C). However, the sensor 11 need not be a color sensor. For example, the sensor 11 may analyze the components of the oil and output the component data as the detection result. Note that in this case, the above-described replacement threshold value is not the intensity value, but is a value corresponding to component data when the oil has approached the end of its service life. In this way, the replacement threshold value is not limited to the intensity value. The sensor 11 may analyze an impurity contained in the oil such as the amount of iron powder, and detect the deterioration state of the oil.

### ===Second Embodiment===

Next, a second embodiment of the present disclosure will be described.

Patent Literature 1 describes lubricating oil that contains various additives. Examples of the additives include load-bearing additives such as oil-based agents, anti-wear agents, extreme pressure additives (extreme pressure agents); antioxidants; and defoamers. Patent Literature 1 describes estimating a concentration of the additives contained in the lubricating oil, based on a value of B in chromaticity data.

However, when diagnosing a remaining content of an antioxidant being one of the additives, the estimation based on the value of B may have low accuracy.

The second embodiment has an object to appropriately diagnose the deterioration of the oil.

### <Concerning Diagnosis Method>

Figures 7A to 7C are graphs showing, in oil used under any given conditions, a change over time in the detection result from the color sensor and a change over time in the remaining content of the antioxidant contained in the oil. A horizontal axis in each drawing indicates time. The left-side vertical axis indicates the RGB (red, green, and blue) intensity values. The right-side vertical axis indicates the remaining content (%) of the additive (here the antioxidant). The solid-line graph indicates the change over time in the detection result from the color sensor (the RGB data) when the color of the oil is detected by the color sensor. The dotted-line graph shows the change over time in the remaining content of the antioxidant. Figures 7A to 7C respectively show graphs of different oils (oil A to oil C).

The color sensor is a sensor for detecting the color of the oil (a color detector). The color sensor includes a light emission unit and a light reception unit. Light is emitted from the light emission unit toward the oil, and light from the oil is received by the light reception unit. The color sensor outputs the RGB data (the color data including the R data, the G data, and the B data) indicating the respective RGB (red, green, blue) intensity values, in accordance with a light amount of each color of the light received by the light reception unit. The R data is the intensity value indicating the light reception result for light of a red wavelength. The G data is the intensity value indicating the light reception result for light of a green wavelength. The B data is the intensity value indicating the light reception result for light of a blue wavelength.

In any of Figures 7A to 7C, the remaining content of the antioxidant contained in the oil decreases over time, as indicated by the dotted-line graph. The detection result from the color sensor changes in accordance with the change in the remaining content of the antioxidant, as indicated by the solid-line graph.

As shown in Figures 7A to 7C, the relationship between the change in the remaining content of the antioxidant and the change in the detection result from the color sensor differs depending on the type of the oil. For example, in the case of oil A, the B data (the data indicating the intensity value of blue) decreases in accordance with the decrease in the remaining content of the antioxidant, but the R data and the G data (the data indicating the intensity values of red and green) hardly decrease, as shown in Figure 1A. In the case of oil B and oil C, not only the B data but also the R data and the G data decrease in accordance with the decrease in the remaining content of the antioxidant, as shown in Figures 7B and 7C.

Figure 20 is a table showing a correlation between the remaining content of the antioxidant and the RGB data.

Numbers in the table indicate correlation coefficients. The closer an absolute value of the correlation coefficient is to 1, the stronger the correlation. The closer the correlation coefficient is to 1, the stronger the positive correlation, and the closer the correlation coefficient is to -1, the stronger the negative correlation. In oil A and oil B, the B data strongly correlates with the remaining content of the antioxidant in comparison to the other colors (the R data and the G data), as shown in Figure 1. On the other hand, in oil C, the G data strongly correlates with the remaining content of the antioxidant in comparison to the other colors (the R data and the B data). When the remaining content of the antioxidant strongly correlates with the B data as in oil A and oil B, the remaining content of the antioxidant is preferably diagnosed based on the B data. On the other hand, when the remaining content of the antioxidant strongly correlates with the G data as in oil C, diagnosing the remaining content of the antioxidant based on the G data makes it possible to diagnose the remaining content of the antioxidant with higher accuracy than diagnosing the remaining content of the antioxidant based on the B data.

The components contained in the oil (base oil, antioxidant, and the like) are determined and the blending of each component is also determined at a timing when a new oil product is developed. Therefore, the relationship between the change in the remaining content of the antioxidant in the oil and the change in the detection result from the color sensor is determined at this timing. Therefore, in any given usage conditions, a measurement result (the graph information) as indicated by the dotted lines and the solid lines of Figures 7A to 7C is acquired by measuring the change over time in the remaining content of the antioxidant of the developed oil and measuring the change over time in the detection result when detecting the oil with the color sensor (the RGB data output from the color sensor). As shown in Figure 20, each color correlation coefficient of the R data, the G data, and the B data with respect to the remaining content of the antioxidant is calculated based on this measurement result, and data that strongly correlates with the remaining content of the antioxidant is identified from the RGB data. In this way, it is possible to identify the wavelength (color) that strongly correlates with the remaining content of the antioxidant per oil type.

In the second embodiment, the deterioration of the oil is diagnosed based on the light reception results for different wavelengths of light depending on the type of the oil. That is, when diagnosing first oil, (for example, oil A or oil B), deterioration of the first oil is diagnosed based on a light reception result of light of a first wavelength (for example, the B data), and when diagnosing second oil (for example, oil C), deterioration of the second oil is diagnosed based on a light reception result of light of a second wavelength (for example, the G data). With this, it is possible to appropriately diagnose the deterioration of the oil in accordance with the type of the oil.

When diagnosing the deterioration of oil in this way, the light reception result of the light of the first wavelength (for example, the B data) for the first oil (for example, oil A or oil B) preferably correlates more strongly with a remaining content of an antioxidant contained in the first oil than the light reception result of the light of the second wavelength (for example, the G data) does. With this, it is possible to appropriately diagnose the deterioration of the first oil due to the decrease in the remaining content of the antioxidant. The light reception result of the light of the second wavelength (for example, the G data) for the second oil (for example, oil C) preferably correlates more strongly with a remaining content of an antioxidant contained in the second oil than the light reception result of the light of the first wavelength (for example, the B data) does. With this, it is possible to appropriately diagnose the deterioration of the second oil due to the decrease in the remaining content of the antioxidant.

A diagnosis device that diagnoses the deterioration of the oil of the second embodiment diagnoses, when diagnosing the first oil (for example, oil A or oil B), the deterioration of the first oil based on the light reception result of the light of the first wavelength (for example, the B data), and diagnoses, when diagnosing the second oil (for example, oil C), the deterioration of the second oil based on the light reception result of the light of the second wavelength (for example, the G data). For example, the diagnosis device 20 to be described below diagnoses the deterioration of the oil based on the B data when diagnosing oil A, oil B, or the like (corresponds to the first oil), and diagnoses the deterioration of the oil based on the G data when diagnosing oil C. With this, it is possible to appropriately diagnose the deterioration of the oil in accordance with the type of the oil.

### <Use Example of Diagnosis Method>

A configuration of a diagnosis system of the second embodiment is the same as that of the diagnosis system 100 shown in Figure 1 described in the first embodiment, and as such, description thereof is omitted.

As shown in Figures 2A and 2B, the sensor unit 10 includes the color sensor 11, the control unit 12, and the communication unit 13. As already described, the color sensor 11 detects the color of the oil and outputs the RGB data. The control unit 12 controls the sensor unit 10. The communication unit 13 communicates with the diagnosis device 20 via the communication network 90. For example, the control unit 12 transmits the detection result from the color sensor 11 (here, the RGB data) to the diagnosis device 20 via the communication unit 13.

The control unit 30 of the diagnosis device 20 diagnoses the replacement period of the oil, based on the detection result from the color sensor 11 (here, the RGB data) stored in the storage unit 40.

As shown in Figure 6, the diagnosed color included in the profile information is information for identifying the data used for diagnosing the oil, among the RGB data being the detection result from the color sensor 11. When the diagnosed color is set to "blue (B)", the "B data" among the RGB data is used when diagnosing the oil. When the diagnosed color is set to "green (G)", the "G data" among the RGB data is used when diagnosing the oil. When the diagnosed color is set to "red (R)", the "R data" among the RGB data is used when diagnosing the oil. Here, the B data is set so as to be used when diagnosing oil A and oil B, and the G data is set so as to be used when diagnosing oil C. As described below, the diagnosed color of the profile information is information for switching between causing the diagnosis processing unit 33 to function as a first diagnosis unit or a second diagnosis unit.

The replacement threshold value included in the profile information is the threshold value used to diagnose whether oil replacement is necessary. The "intensity value" is set as the replacement threshold value. For example, in the case of oil A, an intensity value of "50" is set as the replacement threshold value. Therefore, when diagnosing oil A, the intensity value indicated by the "B data" among the RGB data output by the color sensor 11 is compared with a threshold value of "50". The detection result from the color sensor 11 reaching the replacement threshold value indicates that the oil has deteriorated to a degree at which to perform oil replacement. In other words, the replacement threshold value serves as the reference value for determining that the oil has reached the replacement period (in other words, the replacement threshold value serves as the reference value for diagnosing the service life of the oil).

The diagnosis processing unit 33 of the control unit 30 diagnoses the deterioration of the oil based on the light reception result from the color sensor 11 (the light reception result when receiving light from the oil; here, the RGB data). As described next, the diagnosis processing unit 33 diagnoses the deterioration of the oil based on the B data (the light reception result of the light of the first wavelength) when diagnosing oil A, oil B, or the like (corresponds to the first oil), and diagnoses the deterioration of the oil based on the G data (the light reception result of the light of the second wavelength) when diagnosing oil C (corresponds to the second oil). In other words, the diagnosis processing unit 33 functions as the first diagnosis unit that diagnoses the deterioration of the oil based on the B data, and the second diagnosis unit that diagnoses the deterioration of the oil based on the G data. Note that the diagnosis processing unit may be configured to diagnose the deterioration of the oil based on the R data. Various processing of the control unit 30 (the diagnosis processing unit 33) to be described hereinafter are realized by the arithmetic processing device of the diagnosis device 20 executing the program stored in the storage device.

The diagnosis processing unit 33 determines the diagnosed color (see Figure 6) set for the oil associated with the sensor ID. For example, when performing diagnosis for the oil detected by "sensor ID; sensor 001", the diagnosis processing unit 33 determines that the diagnosed color is "blue (B)" based on the profile database 412 (see Figure 6), since the oil ID associated with "sensor ID; sensor 001" of a sensor database 421C (see Figure 9) is "oil A". On the other hand, when performing diagnosis for the oil detected by "sensor ID; sensor 003", the diagnosis processing unit 33 determines that the diagnosed color is "green (G)" based on the profile database 412 (see Figure 6), since the oil ID associated with "sensor ID; sensor 003" of the sensor database 421C (see Figure 9) is "oil C".

When determining that the diagnosed color is "blue (B)", the diagnosis processing unit 33 (the first diagnosis unit) extracts the B data from the RGB data of the detection result database 43. Therefore, when diagnosing the oil detected by "sensor ID; sensor 001" (here, oil A), the diagnosis processing unit 33 extracts the B data from the RGB data of "sensor ID; sensor 001" of the detection result database 43. The diagnosis processing unit 33 acquires the graph information of the intensity value of blue (B) from the graph information of the RGB intensity values (see Figure 1A) of the profile database 412. The diagnosis processing unit 33 determines the replacement period and the remaining period of the oil as the degradation diagnosis of the oil, based on the B data extracted from the detection result database 43 and the graph information of the intensity value of blue (B) acquired from the profile database 412.

The diagnosis processing unit 33 adjusts the time axis of the graph of the intensity value of blue (B) acquired from the profile database 412 to match the transition of the detection result from the color sensor 11 so far (see the solid-line graph of Figure 14). The diagnosis processing unit 33 determines the predicted transition of the detection result indicated by the dotted line of Figure 14 (the transition of future detection results), by matching the graph with the changed time axis with the transition of the detection result from the color sensor 11 so far (see the solid-line graph of Figure 14) (by fitting the graph with the changed time axis to the solid-line graph of Figure 14).

Next, the diagnosis processing unit 33 calculates the replacement period t1 when the detection result from the color sensor 11 reaches the predetermined threshold value Tc. The replacement period t1 corresponds to the period when the oil has deteriorated to the degree at which to perform oil replacement and corresponds to the "service life expiration date" when the oil reaches the end of its service life.

The diagnosis processing unit 33 calculates the remaining period Pr by calculating the difference between the replacement period t1 and the current time t0, as shown in Figure 14. The remaining period Pr corresponds to the "residual service life (remaining service life)" of the oil, since the remaining period Pr is the period (days) until the service life expiration date of the oil.

It is conceivable that the progression of the deterioration of the oil changes depending on the usage conditions of the equipment that uses the oil. For example, it is conceivable that the change in the detection result from the color sensor 11 accelerates, since the deterioration of the oil accelerates when a usage frequency of the equipment increases. Conversely, it is conceivable that the change in the detection result from the color sensor 11 decelerates, since the deterioration of the oil decelerates when the usage frequency of the equipment decreases. Since the progression of the deterioration of the oil changes in this way, it is conceivable that predicting the transition of future detection results (see the dotted line of Figure 14) based on the most recent progression of the deterioration of the oil results in higher prediction accuracy. Therefore, the predicted transition of the detection result indicated by the dotted line of Figure 14 is preferably determined by using a new detection result among the detection results stored in the detection result database 43 (in other words, without using old detection results). With this, it is possible to predict the transition of future detection results with high accuracy, and to diagnose the replacement period t1 of the oil with high accuracy. However, the predicted transition of the detection result indicated by the dotted line of Figure 14 may be determined by using the detection result from the color sensor 11 from initial use of the oil.

When determining that the diagnosed color is "green (G)", the diagnosis processing unit 33 (the second diagnosis unit) extracts the G data from the RGB data of the detection result database 43. Therefore, when diagnosing the oil detected by "sensor ID; sensor 003" (here, oil C), the diagnosis processing unit 33 extracts the G data from the RGB data of "sensor ID; sensor 003" of the detection result database 43. The diagnosis processing unit 33 acquires the graph information of the intensity value of green (G) from the graph information of the RGB intensity values (see Figure 7C) of the profile database 412. The diagnosis processing unit 33 determines the replacement period t1 and the remaining period Pr of the oil as the degradation diagnosis of the oil, based on the G data extracted from the detection result database 43 and the graph information of the intensity value of green (G) acquired from the profile database 412. Note that a calculation method of the replacement period t1 and the remaining period is as shown in Figure 14, and as such, description thereof is omitted.

When the remaining period Pr is less than a predetermined threshold (for example, 14 days), the notification processing unit 34 of the control unit 30 (see Figure 1) notifies the user terminal 61, the supplier terminal 71, or the like of the alert.

As described above, when diagnosing the first oil, (for example, oil A or oil B), the control unit 30 (the diagnosis processing unit 33) diagnoses the deterioration of the first oil based on the light reception result of the light of the first wavelength (for example, the B data), and when diagnosing the second oil (for example, oil C), the control unit 30 (the diagnosis processing unit 33) diagnoses the deterioration of the second oil based on the light reception result of the light of the second wavelength (for example, the G data). With this, it is possible to appropriately diagnose the deterioration of the oil in accordance with the type of the oil.

Note that the diagnosis device is not limited to the above diagnosis device 20. For example, the sensor unit 10 (or the control unit 12) may be implemented as the diagnosis device that diagnoses the deterioration of the oil, by having the control unit 12 of the sensor unit 10 shown in Figure 2B include a function of the above-described diagnosis processing unit 33. The diagnosis device that diagnoses the deterioration of the oil need not notify the user terminal 61, the supplier terminal 71, or the like of the alert. In other words, the diagnosis device 20 need not include the notification processing unit 34.

The diagnosis of the deterioration of the oil is not limited to diagnosing the replacement period t1, the remaining period Pr, or the like of the oil. For example, the remaining content of the antioxidant contained in the oil may be diagnosed as the diagnosis of the deterioration of the oil. When diagnosing the remaining content of the antioxidant contained in the oil, the above-described profile database 412 preferably further includes data indicating the relationship between time of the remaining content of the antioxidant and the intensity value (data of the dotted line graphs of Figures 7A to 7C). The diagnosis processing unit 33 (the first diagnosis unit) calculates the remaining content of the antioxidant corresponding to the intensity value indicated by the B data, based on the B data from the color sensor 11 (corresponds to the light reception result of the light of the first wavelength). The diagnosis processing unit 33 (the second diagnosis unit) calculates the remaining content of the antioxidant corresponding to the intensity value indicated by the G data, based on the G data from the color sensor 11 (corresponds to the light reception result of the light of the second wavelength). In this case also is it possible to appropriately diagnose the deterioration of the oil in accordance with the type of the oil.

### ===Modified Examples===

The above embodiments are for facilitating understanding of the present disclosure and are not intended to limit the interpretation of the present disclosure. The present disclosure may be modified or improved without departing from its spirit, and it goes without saying that equivalents thereof are included in the present disclosure.

For example, in the first embodiment, the sensor 11 is described as a color sensor, but may be a contact sensor, a non-contact sensor, or the like. In addition to the above-described color sensor, examples of the non-contact sensor include an image sensor and a chemical sensor. The sensor 11 may be a light sensor, an ultrasonic sensor, a temperature sensor, or the like. Examples of the light sensor include a visible light sensor, an infrared sensor, and an ultraviolet sensor.

In the first embodiment, a case has been described in which the control unit 30 notifies the notification destination associated with the sensor 11 of the replacement information, but a notification destination associated with the sensor unit 10, the equipment 62 or the tank 63 may be notified of the replacement information. In this case also, the "notification destination associated with the sensor 11" shall include the "notification destination associated with the sensor unit 10, the equipment 62, or the tank 63", since the sensor unit 10, the equipment 62, or the tank 63 includes the sensor 11. The control unit 30 may notify a notification destination simply selected by an administrator, a notification destination selected by the user, or the like of the replacement information, rather than the notification destination associated with the sensor 11.

In the first embodiment and the second embodiment, the storage device 52 has been described as a recording medium on which the program is recorded, but the recording medium is not limited thereto. The recording medium may be, for example, a storage device such as a hard disk (HDD: hard disk drive) or a solid-state drive (SSD: solid-state drive) incorporated into a computer system, or a portable recording medium such as a magneto-optical disk, read-only memory (ROM), a compact disc (CD)-ROM, or flash memory.

### [Reference Signs List]

- 10: sensor unit
- 11: sensor
- 12: control unit
- 13: communication unit
- 20: diagnosis device
- 30: control unit
- 31: setting processing unit
- 32: data acquisition unit
- 33: diagnosis processing unit
- 34: notification processing unit
- 35: history processing unit
- 40: storage unit
- 41: basic information database
- 411: oil database
- 412: profile database
- 413: supplier database
- 414: user database
- 414': customer database
- 415: sensor database
- 42: diagnosis settings database
- 43: detection result database
- 44: replacement history database
- 51: arithmetic processing device
- 52: storage device
- 53: communication device
- 54: display device
- 55: input device
- 61: user terminal
- 62: equipment
- 63: tank
- 71: supplier terminal
- 90: communication network
- 100: diagnosis system

## Claims

1. A diagnosis device comprising:
a storage unit configured to store a detection result from a sensor indicating a deterioration state of oil; and
a control unit configured to diagnose a replacement period of the oil based on the detection result stored in the storage unit, and notify a notification destination associated with the sensor of replacement information indicating the diagnosed replacement period.

2. The diagnosis device according to claim 1, wherein
at least one of a user of the oil and a supplier having supplied the oil to the user can be set as the notification destination.

3. The diagnosis device according to claim 1, wherein
the control unit calculates, as the replacement period, a period when the detection result reaches a replacement threshold value.

4. The diagnosis device according to claim 3, wherein
the replacement threshold value can be set in association with the sensor.

5. The diagnosis device according to claim 1, wherein
the control unit diagnoses the replacement period using a new detection result among the detection results stored in the storage unit.

6. The diagnosis device according to claim 1, wherein
the control unit notifies the notification destination of the replacement information when a remaining period reaches a period threshold value.

7. The diagnosis device according to claim 6, wherein
the period threshold value can be set in association with the sensor.

8. The diagnosis device according to claim 6 or 7, wherein
when notifying the notification destination of the replacement information, the control unit notifies the notification destination of a supplier having supplied the oil to a user of the oil of a list including the replacement information of another oil being supplied to the user.

9. The diagnosis device according to claim 1, wherein
the control unit notifies the notification destination of a list including the replacement information corresponding to each of a plurality of the sensors.

10. The diagnosis device according to claim 9, wherein
the control unit notifies the notification destination of the list in which a plurality of pieces of the replacement information are arranged in order of remaining period.

11. The diagnosis device according to claim 9 or 10, wherein
the control unit identifies the plurality of sensors associated with a user to which a supplier of the oil is supplying the oil, and notifies the supplier of the list including the replacement information corresponding to each of the identified plurality of sensors.

12. The diagnosis device according to claim 9, wherein
when a user of the oil requests the list, the control unit notifies a supplier having supplied the oil to the user that the user has requested the list.

13. The diagnosis device according to claim 1, wherein
when a user of the oil requests the replacement information, the control unit notifies a supplier having supplied the oil to the user that the user has requested the replacement information.

14. The diagnosis device according to claim 12 or 13, wherein
the control unit notifies the supplier of information relating to a past oil replacement of the user.

15. The diagnosis device according to claim 1, wherein
the sensor is a color sensor.

16. the diagnosis device according to claim 1, wherein
the control unit diagnoses deterioration of the oil based on a detection result, among the detection results from the sensor, of light of a wavelength corresponding to a type of the oil.

17. A diagnosis method comprising:
acquiring a detection result from a sensor configured to detect a deterioration state of oil;
diagnosing a replacement period of the oil based on the detection result; and
notifying a notification destination associated with the sensor of replacement information indicating the diagnosed replacement period.

18. A computer-readable recording medium on which a program is recorded for causing a computer to execute:
acquiring a detection result from a sensor configured to detect a deterioration state of oil;
diagnosing a replacement period of the oil based on the detection result; and
notifying a notification destination associated with the sensor of replacement information indicating the diagnosed replacement period.

19. A diagnosis device comprising:
a storage unit configured to store a light reception result obtained when receiving light from oil; and
a control unit configured to diagnose deterioration of the oil based on the light reception result, wherein
the control unit diagnoses the deterioration of the oil based on a light reception result of light of a wavelength corresponding to a type of the oil.

20. The diagnosis device according to claim 19, wherein
when diagnosing first oil, the control unit diagnoses deterioration of the first oil based on a light reception result of light of a first wavelength, and when diagnosing second oil different from the first oil, the control unit diagnoses deterioration of the second oil based on a light reception result of light of a second wavelength different from the first wavelength.

21. A computer-readable recording medium on which a program is recorded for causing a computer to execute:
acquiring light reception results obtained when receiving light from oil; and
diagnosing deterioration of the oil based on a light reception result, among the light reception results, of light of a wavelength corresponding to a type of the oil.
